(19) Europäisches Patentamt / European Patent Office / Office européen des brevets

(11) **EP 4 697 789 A1**

(12) **EUROPEAN PATENT APPLICATION**
published in accordance with Art. 153(4) EPC

(43) Date of publication:
**18.02.2026 Bulletin 2026/08**

(21) Application number: **24803595.8**

(22) Date of filing: **29.03.2024**

(51) International Patent Classification (IPC):
**H04W 24/08** (2009.01)   **H04W 88/08** (2009.01)
**H04W 92/20** (2009.01)

(52) Cooperative Patent Classification (CPC):
**H04W 24/08; H04W 88/08; H04W 92/20**

(86) International application number:
**PCT/KR2024/004031**

(87) International publication number:
**WO 2024/232539 (14.11.2024 Gazette 2024/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.05.2023 KR 20230059468**

(71) Applicant: **Samsung Electronics Co., Ltd.**
**Suwon-si, Gyeonggi-do 16677 (KR)**

(72) Inventors:
• **SONG, Junhyuk**
  **Suwon-si Gyeonggi-do 16677 (KR)**

• **KANG, Seungwon**
  **Suwon-si Gyeonggi-do 16677 (KR)**
• **KHO, Youngsung**
  **Suwon-si Gyeonggi-do 16677 (KR)**
• **KIM, Chulmin**
  **Suwon-si Gyeonggi-do 16677 (KR)**
• **LEE, Chungkeun**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND METHOD FOR DELAY MEASUREMENT IN WIRELESS COMMUNICATION SYSTEM**

(57)   According to embodiments of the present disclosure, the provided method performed by means of a first distributed unit (DU) may comprise: transmitting a measurement request message to a second DU through a communication interface between the first DU and the second DU; and receiving a measurement response message from the second DU through the communication interface. The measurement request message can include: a global ID of the first DU for a base station; first identification information of the first DU in the base station; first time information indicating a first system time at which the measurement request message is transmitted from the first DU; a global ID of the second DU for the base station; second identification information of the second DU in the base station; and second time information. The second time information can be used to identify the difference between a second system time at which the measurement request message is received by the second DU and a third system time at which the measurement response message is transmitted from the second DU.

FIG. 6

**Description**

**[Technical Field]**

The present disclosure relates to a wireless communication system, and more particularly, to an electronic device and a method for delay measurement in the wireless communication system.

**[Background Art]**

In order to meet the increasing demand for wireless data traffic after the commercialization of 4G (4th generation) communication systems, efforts have been made to develop improved 5G (5th generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines various standards in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5th Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6th Generation (6G) era, efforts are being made to develop an improved 6G communication system to connect hundreds of billions of devices and objects and provide various services. For this reason, the 6G communication system is referred to as a system beyond 5G.

In the 6th Generation (6G) communication system, which is predicted to be realized around 2030, a maximum transmission speed is tera (i.e., 1,000 giga) bit per second (bps), and the wireless latency is 100 microseconds ($\mu$sec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In 6G communication systems, the functions of the RAN are expected to be further segmented into service subscribers and service providers. In service-based networks, service subscription verification procedures for service subscription status will be applied in various functions.

The above-described information may be provided as a related art for the purpose of helping to understand the present disclosure. No claim or determination is raised as to whether any of the above-described information may be applied as a prior art related to the present disclosure.

**[Disclosure]**

**[Technical Solution]**

According to embodiments of the present disclosure, a method performed by a first distributed unit (DU) is provided. The method may comprise transmitting, to a second DU, a measurement request message through a communication interface between the first DU and the second DU. The method may comprise receiving, from the second DU, a measurement response message through the communication interface. The measurement request message may include a global identification (ID) of a base station of the first DU, first identification information of the first DU in the base station, and first time information for indicating a first system time at which the measurement request message is transmitted from the first DU. The measurement response message may include a global ID of a base station of the second DU, second identification information of the second DU in the base station, and second time information. The second time information may be used to identify a difference between a second system time at which the measurement request message is received at the second DU and a third system time at which the measurement response message is transmitted from the second DU.

According to embodiments of the present disclosure, an electronic device for a first distributed unit (DU) is provided. The electronic device may comprise memory storing one or more instructions. When executed, the one or more instructions may cause the first DU to transmit, to a second DU through a communication interface between the first DU and the second DU, a measurement request message. When executed, the one or more instructions may cause the first DU to receive, from the second DU through the communication interface, a measurement response message. The measurement request message may include a global ID of a base station of the first DU, first identification information of the first DU in the base station, and first time information for indicating a first system time at which the measurement request message is transmitted from the first DU. The measurement response message may include a global ID of a base station of the second DU, second identification information of the second DU in the base station, and second time information. The second time information may be used to identify a difference between a second system time at which the measurement request message is received at the second DU and a third system time at which the measurement response message is transmitted from the second DU.

According to embodiments of the present disclosure, an electronic device of a first distributed unit (DU) is provided. The electronic device may comprise at least one transceiver, at least one processor, and memory. The at least one processor may be operably coupled with the memory and the at least one transceiver. The at least one processor may be configured to transmit, to a second DU, a measurement request message through a communication interface between the first DU and the second DU. The at least one processor may be configured to receive, from the second DU, a measurement response message through the communication interface. The measurement request message may include a global identification (ID) of a base station of the first DU, first identification information of the first DU in the base station, and first time information for indicating a first system time at which the measurement request message is transmitted from the first DU. The measurement response message may include a global ID of a base station of the second DU, second identification information of the second DU in the base station, and second time information. The second time information may be used to identify a difference between a second system time at which the measurement request message is received at the second DU and a third system time at which the measurement response message is transmitted from the second DU.

**[Description of the Drawings]**

The above and other aspects, features, and advantages of certain embodiments of the present disclosure will become more apparent from the following description taken with the accompanying drawings.

FIGS. 1A to 1B illustrate examples of a wireless communication system.
FIGS. 2A to 2C illustrate examples of a spectrum aggregation environment.
FIG. 3 illustrates an example of a resource structure in a time domain and a frequency domain.
FIG. 4A illustrates an example of an architecture for an open (O)- radio access network (RAN).
FIG. 4B illustrates an example of network entities according to distributed deployment in O-RAN.
FIG. 5 illustrates an example of components of a DU.
FIG. 6 illustrates an example of a first method of a measurement procedure in an interface between DUs.
FIG. 7 is a diagram for describing signaling of parameters for delay measurement in an interface between DUs.
FIGS. 8A to 8C are diagrams illustrating signaling for delay measurement.
FIG. 9A illustrates an example of a second method of a measurement procedure in an interface between DUs.
FIG. 9B is a diagram for describing signaling of parameters for delay measurement in an interface between DUs.
FIGS. 10A to 10C are diagrams illustrating signaling for delay measurement.
FIG. 11 is a diagram illustrating signaling for delay measurement.
FIG. 12 is a diagram illustrating signaling for delay measurement.
FIG. 13 is a diagram illustrating signaling for delay measurement.
FIG. 14 illustrates an example of delay measurement using a setup procedure in an interface between DUs.
FIG. 15 illustrates an example of a removal procedure in an interface between DUs.
FIG. 16 illustrates an example of a time stamp format.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

The terms referring to a signal (e.g., signal, information, message, signaling), terms referring to a resource (e.g., symbol, slot, subframe, radio frame, subcarrier, resource element (RE), resource block (RB), bandwidth part (BWP), occasion), terms referring to an operation state (e.g., step, operation, procedure), terms referring to data (e.g., packet, user stream, information, bit, symbol, codeword), terms referring to a channel, terms referring to network entities, terms referring to components of a device, and the like, used in the following description are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as 'greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments by using terms used in some communication standards (e.g., 3rd Generation Partnership Project (3GPP), extensible radio access network (xRAN), and open-radio access network (O-RAN)), but this is only an example for description. Various embodiments of the present disclosure may be easily modified and applied to other communication systems.

In the present disclosure, a signal quality may be, for example, at least one of a reference signal received power (RSRP), a beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above examples, other terms having equivalent technical meanings or other metrics indicating channel quality may also be used. Hereinafter, in the present disclosure, when the signal quality is high, it means that a signal quality value related to a signal strength is large or a signal quality value related to an error rate is small. The higher the signal quality, the smoother a wireless communication environment may be ensured. In addition, an optimal beam may mean a beam having the highest signal quality among beams.

Currently, discussions are underway for the improvement and enhancement of the initial 5G mobile communication technology, considering services that the 5G mobile communication technology aimed to support, and physical layer standardization is in progress for technologies such as Vehicle-to-Everything (V2X), which assists driving decisions of autonomous driving vehicles based on their location and state information transmitted by the vehicle and enhances user convenience, New Radio Unlicensed (NR-U), which aims for system operation compliant with various regulatory requirements in unlicensed frequency bands, technology for reducing power consumption of NR terminals (UE Power Saving technology), Non-Terrestrial Network (NTN), which enables direct terminal-to-satellite communication for securing coverage in areas where communication with a terrestrial network is unavailable, and Positioning.

In addition, standardization in the field of wireless interface architecture/protocols is also in progress for technologies such as an Industrial Internet of Things (IIoT) for supporting new services through connection and convergence with other industries, an Integrated Access and Backhaul (IAB) providing nodes for expanding network service areas by integrally supporting wireless backhaul links and access links, Mobility Enhancement technologies including Conditional Handover and Dual Active Protocol Stack (DAPS) handover, and a 2-step random access (2-step RACH for NR) simplifying a random access procedure, and furthermore, standardization in the field of system architecture/services is also in progress for a 5G baseline architecture (e.g., a Service-Based Architecture, a Service-Based Interface) for applying Network Functions Virtualization (NFV) and Software-Defined Networking (SDN) technologies, and Mobile Edge Computing (MEC) that receives services based on a location of a terminal.

When such a 5G mobile communication system is commercialized, a rapidly increasing number of connected devices will be connected to communication networks, and accordingly, it is expected that enhancement of the functions and performance of the 5G mobile communication system and integrated operation of the connected devices will be required. To this end, new studies are to be conducted on eXtended Reality (XR) for efficiently supporting Augmented Reality (AR), Virtual Reality (VR), and Mixed Reality (MR), 5G performance improvement and complexity reduction using Artificial Intelligence (AI) and Machine Learning (ML), and AI service support, metaverse service support, and drone communications.

Furthermore, the advancement of such 5G mobile communication system could serve as the foundation for the development of technologies such as not only a new waveform to ensure coverage in the terahertz band of the 6G mobile communication technology, Multiple antenna transmission technologies such as Full dimensional MIMO (FD-MIMO), array antenna, and large-scale antenna, high-dimensional spatial multiplexing technology using metamaterial-based lenses and antennas and Orbital Angular Momentum (OAM) to improve coverage of terahertz band signals, and a Reconfigurable Intelligent Surface (RIS) technology, but also a full duplex technology, which enables the uplink and downlink to utilize simultaneously the same frequency resources, an artificial intelligence (AI)-based communication technology that realizes system optimization, by internalizing an end-to-end AI support function and utilizing satellite and AI from a design stage, and a next-generation distributed computing technology that realizes services with complexities that exceed limits of terminal computing capabilities by utilizing ultra-high-performance communication and computing resources.

Although 4G and/or 5G environments are illustrated as an example, this description does not limit the scope of the communication environments of the embodiments of the present disclosure. The technical principles according to the embodiments of the present disclosure may also be applied to 6G and post-6G communication technologies and network environments.

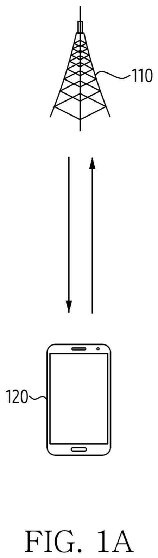

FIGS. 1A to 1B illustrate examples of a wireless communication system.

Referring to FIG. 1A, FIG. 1A illustrates a base station 110 and a terminal 120 as a portion of nodes that utilize a wireless channel in a wireless communication system. FIG. 1A illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PCS interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

The terminal 120 may be configured with cells of the base station 110 through carrier aggregation (CA). The CA technology is a technology that increases frequency utilization efficiency of the terminal 120 and the base station 110 by connecting the terminal to homogeneous wireless communication cell groups having a common radio resource control entity and simultaneously using frequency resources on component carriers of respective cells located in different frequency bands for signal transmission and reception. The cells configured for CA may include one a primary cell (PCell) and one or more secondary cells (SCells).

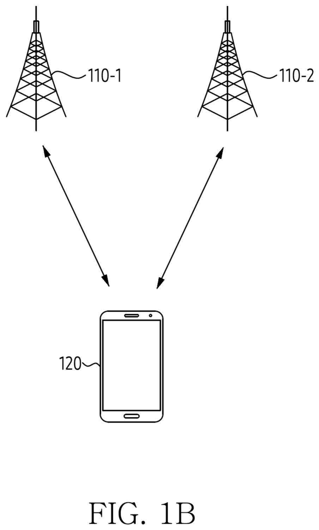

Referring to FIG. 1B, the terminal 120 may be configured in dual connectivity (DC) using the first base station 110-1 and the second base station 110-2. The DC technology is a technology that increases frequency utilization efficiency by allowing the terminal to simultaneously connect to two independent heterogeneous or homogeneous wireless communication cell groups having separate radio resource control entities and using frequency resources on component carriers of cells within respective cell groups located in different frequency bands for signal transmission and reception. It is a technology that the terminal 120 is connected to two different radio resource entities (e.g., the first base station 110-1 and the second base station 110-2) for using radio resources allocated by each radio resource entity. In MR-DC, a UE (e.g., the terminal 120) in a radio resource control (RRC) connected state (i.e., RRC_CONNECTED) may be configured to use radio resources provided by two independent schedulers. Each scheduler may be located in an NG-RAN node (e.g., the first base station 110-1 or the second base station 110-2). Herein, a node is a master node (MN), and another node is a secondary node (SN). The MN and SN are connected through a network interface, and the MN may be connected to a core network. The SN may or may not be connected to the core network.

The MN may provide a master cell group (MCG). The MN may be referred to as an M-NODE or M-NG-RAN node in addition to the MN. The MCG may include one or more cells. The MCG may include a primary cell (PCell). The MCG may include a plurality of aggregated cells. The MCG may include the PCell and one or more secondary cells (SCells). The SN may provide a secondary cell group (SCG). The SN may be referred to as an S-NODE or S-NG-RAN node in addition to the SN. The SCG may include one or more cells. The SCG may include a plurality of aggregated cells. The SCG may include a PCell and/or a SCell like the MCG. A cell functioning as a PCell within the SCG may be referred to as a primary secondary cell (PSCell). The sub-cell group may include a PSCell and one or more SCells. Hereinafter, as a term including PCell and PSCell, a special cell (SpCell) may be used. The Spcell means a primary cell of the MCG or SCG. In other words, the SpCell of the MCG indicates the PCell, and the SpCell of the SCG indicates the SCell.

The possible types of DCs may be defined as follows.

1) EN-DC: A dual connection in which an eNB is connected to an evolved packet core (EPC), and a terminal is connected to an eNB acting as an MN and an gNB acting as an SN. Here, the gNB may be referred to as an en-gNB, and the en-gNB may or may not be connected to the EPC.

2) NGEN-DC: A dual connection in which an eNB is connected to a 5G core (5GC), and a terminal is connected to an eNB acting as an MN and a gNB acting as an SN. Here, the eNB may be referred to as an ng-eNB.

3) NE-DC: A dual connection in which a gNB is connected to a 5GC, and a terminal is connected to a gNB acting as an MN and an eNB acting as an SN. Here, the eNB may be referred to as an ng-eNB.

4) NR-DC: A dual connection in which a gNB is connected to a 5GC, and a terminal is connected to a gNB acting as an MN and a gNB acting as an SN. The NR-DC may be used even when the UE is connected to a single gNB and performs both the role of MN and SN and configures both MCG and SCG.

The terminal 120 may support multi-radio (MR)-DC. The terminal 120 may be connected to the first base station 110-1 and the second base station 110-2. The first base station 110-1, which is an MN, and the second base station 110-2, which is an SN, may be connected to a terminal. DC technology may provide a higher data rate together with carrier aggregation (CA) provided in each base station. The first base station 110-1 and the second base station 110-2 may transmit downlink traffic to the terminal 120 or receive uplink traffic from the terminal 120 as MN and SN, respectively.

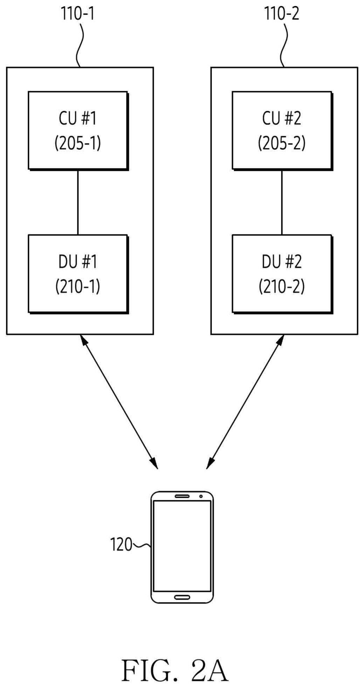

FIGS. 2A to 2C illustrate examples of a spectrum aggregation environment. The spectrum aggregation refers to a wireless communication technology using a certain frequency interval in a frequency domain and another frequency interval different from the frequency interval together. The frequency interval may correspond to at least one of a resource block (RB), a bandwidth part (BWP), a bandwidth, a cell, a cell group, a frequency band, and/or a frequency range, according to the technology used. For example, the spectrum aggregation may include CA. The bandwidth of a primary cell (PCell) and the bandwidth of a secondary cell (SCell) may be used together for data communication. For example, the spectrum aggregation may include DC. A frequency domain occupied by a cell of the MCG of the MN and a frequency domain occupied by a cell of the SCG of the SN may be used together for communication. For example, the spectrum aggregation may include CoMP. Base stations having different frequency spectrums may be used for data communication. For example, the spectrum aggregation may include a multi (M)-transmission reception point (TRP). Resources allocated in different frequency domains may be used for data transmission.

A cell may refer to an area (or coverage) capable of being covered by one base station (e.g., gNB) (or one DU). The cell may indicate not only a geographical area but also an area occupying a specific spectrum in a frequency domain. The DU may cover one cell or may cover multiple cells. Here, the multiple cells may be distinguished by a frequency supported or an area of a sector covered. A serving cell, which provides higher-layer signaling (e.g., radio resource control (RRC) signaling) with a terminal, may refer to one cell or multiple cells. When the terminal 120 is not configured to support carrier aggregation (CA) and dual connectivity (DC), the serving cell may be one cell corresponding to a PCell. When the terminal 120 is configured to support CA or DC, the serving cell may be a set of cells including the PCell and one or more SCells.

Referring to FIG. 2A, a base station may be separated into a CU and a DU. For example, when the base station corresponds to a gNB, the CU is a logical node that hosts RRC, service data adaptation protocol (SDAP), and packet data convergence protocol (PDCP) of the base station. The CU and the DU may be connected through an F1 interface. The DU is a logical node that hosts a radio link control (RLC) layer, a medium access control (MAC) layer, and a physical (PHY) layer. The DU may support one or more cells, and a cell may be supported by only one DU. The first base station 110-1 may include a CU #1 205-1 and a DU #1 210-1. The DU #1 210-1 may provide one or more cells. The second base station 110-2 may include a CU #2 205-2 and a DU #2 210-2. The DU #2 210-2 may provide one or more cells. For example, for DC operation, an MgNB-DU may indicate a gNB-DU (e.g., the DU #1 210-1) of a gNB or an en-gNB acting as a master node, and an SgNB-DU may indicate a gNB-DU (e.g., the DU #2 210-2) of a gNB or an en-gNB serving as a secondary node.

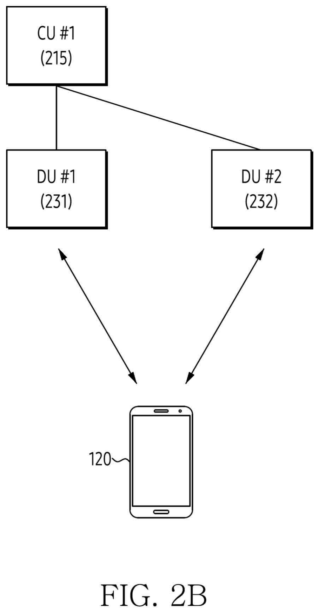

Referring to FIG. 2B, a base station may be separated into a CU and a DU. Unlike a case where multiple independent base stations (e.g., the first base station 110-1 and the second base station 110-2) serve the terminal 120, one CU and multiple DUs may serve the terminal 120. For example, the CU #1 215 may be connected to the DU #1 231 and the DU #2 232. The CU #1 215 may be connected to each of the DU #1 231 and the DU #2 232 through an F1 interface. The DU #1 231 may provide one or more cells. The DU #2 232 may provide one or more cells. For example, for CA operation, the DU #1 231 may provide a cell corresponding to a PCell. The DU #2 232 may provide a cell corresponding to an SCell. Two cells may be configured for the terminal 120.

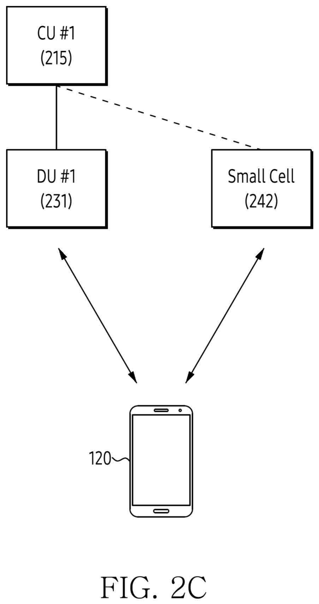

Referring to FIG. 2C, a base station may be separated into a CU and a DU. In addition to a distributed deployment separated into the CU and the DU, a base station 242 for small cells may additionally be deployed. For example, the CU #1 215 may be connected to the DU #1 231 through an F1 interface. The base station 242, as an independent base station, may perform communication with the CU #1 215. The DU #1 231 may provide one or more cells. The base station 242 may provide one or more small cells. For example, for CA operation, the DU #1 231 may provide a cell corresponding to a PCell. The DU #2 232 may provide a cell corresponding to an SCell. Two cells may be configured for the terminal 120.

Vendors of the DUs (or the DU and a base station of the small cell) may be different from each other. Frequency intervals used among multi-vendors may not satisfy compatibility with each other. For example, a vendor of a first DU and a vendor of a second DU may have purchased different frequency bands from each other. A frequency domain occupied by a cell provided by the first DU may be different from a frequency domain occupied by a cell provided by the second DU. Since the second DU cannot accurately know information regarding the cell of the first DU, it may be difficult to configure CA between the two cells. If CA of the two cells is configured, signaling through a CU or a higher entity is required because there is no interface between the first DU and the second DU. However, an increase in signaling causes delay, and thus efficient resource management may be difficult.

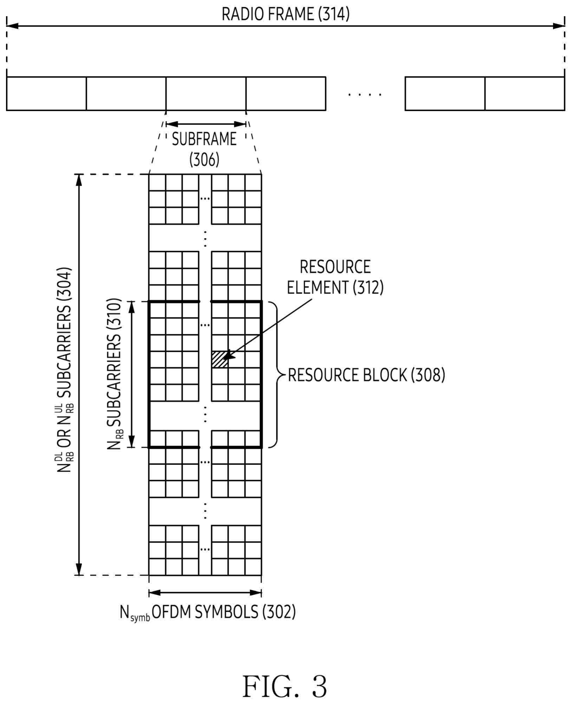

Hereinafter, embodiments of the present disclosure describe new interfaces and procedures and messages for configuring the interfaces for spectrum aggregation, such as the CA or the DC described above. First, resources in a physical layer are described with reference to FIG. 3.

FIG. 3 illustrates an example of a resource structure in a time domain and a frequency domain. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and $N_{symb}$ OFDM symbols 302 are gathered to form one slot 306. A length of a subframe is defined as 1.0 ms, and a length of a radio frame 314 is defined as 10 ms. A minimum transmission unit in the frequency domain is a subcarrier, and a carrier bandwidth configuring a resource grid may be configured with $N_{BW}$ subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as $N_{symb}$ consecutive OFDM symbols in the time domain and $N_{SC}^{RB}$ consecutive subcarriers in the frequency domain. In an NR system, a resource block (RB) 308 may be defined as $N_{SC}^{RB}$ consecutive subcarriers 310 in the frequency domain. One RB 308 includes $N_{SC}^{RB}$ REs 312 on a frequency axis. In general, a minimum unit of transmission of data is RB and the number of subcarriers is $N_{SC}^{RB}=12$. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

[Table 1]

| Channel bandwidth [MHz] | SCS | 5 | 10 | 20 | 50 | 80 | 100 |
|---|---|---|---|---|---|---|---|
| Transmission bandwidth configuration | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |
| $N_{RB}$ | | | | | | | |

[Table 2]

| Channel bandwidth [MHz] | SCS | 50 | 100 | 200 | 400 |
|---|---|---|---|---|---|
| Transmission bandwidth configuration NRB | 60kHz | 66 | 132 | 264 | N/A |
| | 120kHz | 32 | 66 | 132 | 264 |

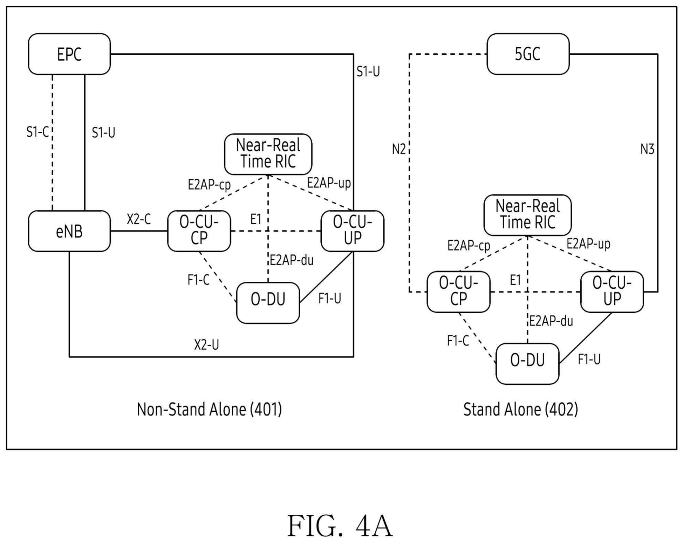

FIG. 4A illustrates an example of an architecture for an open (O)- radio access network (RAN). As a 4th generation (4G)/5th generation (5G) communication systems (e.g., a new radio (NR)) have been commercialized, support for differentiated services to users in a virtualized network has been required. The 3GPP is a joint research project among organizations related to mobile communication and aims to prepare a specification of a third-generation mobile communication system that is globally applicable within scopes of the IMT-2000 project of the International Telecommunication Union (ITU). The 3GPP was established in December 1998, and the 3GPP specification is based on an advanced GSM specification and includes radio, core network, and service architecture in a standardization scope. Accordingly, the open radio access network (O-RAN) newly defines nodes, configuring 3GPP network entity (NE) and a base station, including radio unit (RU), digital unit (DU), central unit (CU)-control plane (CP), and CU-user plane (UP), as O-RAN(O)-RU, O-DU, O-CU-CP, and OO-CU-UP, respectively, and further standardizes a near-real-time (NRT) radio access network intelligent controller (RIC). Herein, O-RU, O-DU, O-CU-CP, and O-CU-UP may be understood as objects configuring RAN capable of operating according to the O-RAN specification and may be referred to as E2 nodes. An interface with objects configuring a RAN capable of operating according to the O-RAN specification between the RIC (e.g., Near-RT RIC) and the E2 nodes uses an E2 application protocol (E2AP).

Referring to FIG. 4A, according to an embodiment, network entities according to an NSA mode 401 may be configured as a wireless communication system in the O-RAN. In a deployment according to the NSA mode 401, an eNB may be connected to the EPC through an S1-C/S1-U interface and connected to the O-CU-CP through an X2 interface. According to an embodiment, network entities according to an SA mode 402 may be configured as a wireless communication system in the O-RAN. In a deployment according to the SA mode 402, the O-CU-CP may be connected to a 5G core (5GC) through an N2/N3 interface.

A Near-RT (real-time) RIC is a logical node capable of collecting information in a cell site where a terminal and O-DU, O-CU-CP, or O-CU-UP transmit and receive data. The Near-RT RIC may be implemented in a form of a server intensively deployed in a single physical location. A connection may be established, through Ethernet, between the O-DU and the Near-RT RIC, between the O-CU-CP and the Near-RT RIC, and between the O-CU-UP and the Near-RT RIC. To this end, interface specifications for communication between the O-DU and the Near-RT RIC, between the O-CU-CP and the Near-RT RIC, and between the O-CU-UP and the Near-RT RIC have become necessary, and message specifications such as E2-DU, E2-CU-CP, and E2-CU-UP and definitions of procedures between O-DU, O-CU-CP, O-CU-UP, and the Near-RT RIC are required. Particularly, in a virtualized network, support for differentiated services to users is required, and by concentrating call processing message/function occurring in the O-RAN on the Near-RT RIC, it is necessary to define the functions of messages of E2-DU, E2-CU-CP, and E2-CU-UP for supporting a service for wide cell coverage.

The Near-RT RIC performs communication with O-DU, O-CU-CP, and O-CU-UP by using an E2 interface and may set an event occurrence condition by generating and transmitting a subscription message. For example, the Near-RT RIC may generate an E2 subscription request message and transmit it to an E2 node (e.g., O-CU-CP, O-CU-UP, or O-DU) to set a call processing event. In addition, after the event is set, the E2 node transmits a subscription request response message delivered to the Near-RT RIC. The E2 node may transmit a current state to the Near-RT RIC through an E2 indication/report. The Near-RT RIC may provide control for O-DU, O-CU-CP, and O-CU-UP by using an E2 control message.

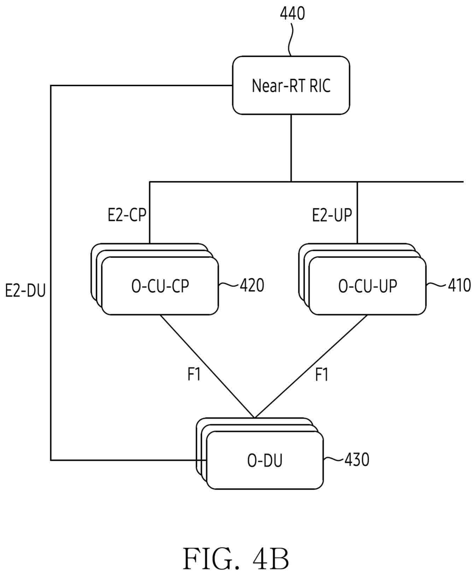

FIG. 4B illustrates an example of network entities according to distributed deployment in O-RAN.

Referring to FIG. 4B, a base station 110 may be distributed into a plurality of network entities defined in the O-RAN specification. For example, the base station 110 may include O-CU-UP 410, O-CU-CP 420, and/or O-DU 430. A Near-RT RIC 440 is connected to O-CU-CP 420, O-CU-UP 410, and O-DU 430. The Near-RT RIC 440 is a device for customizing RAN functionality for a new service or regional resource optimization. The Near-RT RIC 440 may provide functions such as network intelligence (e.g., policy enforcement and handover optimization), resource assurance (e.g., radio-link management and advanced self-organized-network (SON)), and resource control (e.g., load balancing and slicing policy). The Near-RT RIC 440 may perform communication with the O-CU-CP 420, the O-CU-UP 410, and the O-DU 430. The Near-RT RIC 440 may be connectable to each node through E2-CP, E2-UP, and E2-DU interfaces. In addition, an interface between O-CU-CP and DU and an interface between O-CU-UP and DU may be referred to as an F1 interface. In the following description, DU and O-DU, CU-CP and O-CU-CP, and CU-UP and O-CU-UP may be used interchangeably.

In FIG. 4B, one Near-RT RIC 440 is exemplified, but according to various embodiments, a plurality of RICs may exist. The plurality of RICs may be implemented as a plurality of hardware located in the same physical location or implemented through virtualization using a single hardware.

In a communication system in which a cell radius of a base station is relatively large, each base station is installed to include functions of a digital processing unit (or distributed unit (DU)) and a radio frequency (RF) processing unit (or radio unit (RU)). As higher frequency bands are used in 4th generation (4G) and/or subsequent communication systems (e.g., 5G) and cell coverage of base stations becomes smaller, the number of base stations required to cover a specific area has increased. A burden of installation cost for operators to install the base stations has also increased. To minimize the installation cost of the base stations, it may be assumed that a DU (e.g., the O-DU 430) and an RU (e.g., the O-RU) of the base station 110 are separated and one or more RUs are connected to one DU through a wired network. In FIGS. 4A to 4B, O-DU 430 is described as an entity providing a cell to the terminal 120, but the O-DU 430 providing the cell may include providing coverage by one or more RUs that are connected to the O-DU 430 and geographically distributed to cover a plurality of regions.

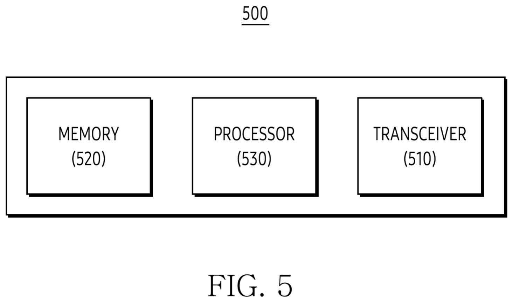

FIG. 5 illustrates an example of components of a DU.

FIG. 5 illustrates a configuration of a device according to embodiments of the present disclosure. A structure illustrated in FIG. 5 may be understood as a configuration of a device having at least one function of the above-described Near-RT RIC, non-RT RIC, O-CU-CP, O-CU-UP, or O-DU. The terms "...unit" and "...er", as used below, refer to units that process at least one function or operation, and may be implemented by hardware, software, or a combination of hardware and software.

Referring to FIG. 5, the device may include a transceiver 510, memory 520, and a processor 530.

The transceiver 510 provides an interface for performing communication with other devices in a network. That is, the transceiver 510 converts a bit stream transmitted from the device to another device into a physical signal and converts a physical signal received from another device into a bit stream. That is, the transceiver 510 may transmit or receive a signal. Accordingly, the transceiver 510 may be referred to as a modem, a communication unit, a transmit unit, a receive unit, or a transmit/receive unit. In this case, the transceiver 510 enables the device to communicate with other devices or systems through a backhaul connection (e.g., a wired backhaul or a wireless backhaul) or through a network. The transceiver 510 may include one or more transceivers.

The memory 520 stores data such as a basic program, an application program, and setting information for operation of the device. The memory 520 may be configured with a volatile memory, a non-volatile memory, or a combination of the volatile memory and the non-volatile memory. The memory 520 provides stored data according to a request of the processor 530. The memory 520 may be referred to as a storage unit.

The processor 530 controls overall operations of the device. For example, the processor 530 transmits and receives signals through the transceiver 510. In addition, the processor 530 writes data and reads data in the memory 520. The processor 530 may be referred to as a control unit. For this, the processor 530 may be configured with a plurality of processors or may include at least one sub-processor. According to various embodiments, the processor 530 may control the device to perform operations according to various embodiments described in the present disclosure.

The communication protocols defined in the O-RAN specification or 3GPP do not define an interface between DUs and a base station or between DUs. As communication technology advances, the number of network entities increases, and communication with an external node (e.g., a base station or another DU) through a CU causes delay, so it is necessary to define an interface between DUs or between a DU and a base station. Hereinafter, for spectrum aggregation such as carrier aggregation (CA) described above, a new interface and a procedure and message for configuring the interface are proposed. Hereinafter, although procedures and messages related to an interface between DUs, it is of course that the same or similar manner may be applied to an interface between a DU and an independent base station (e.g., a base station of a small cell). In describing the interface between DUs in the present disclosure, the DUs may be from the same vendor or from different vendors. That is, even between DUs of different vendors, information exchange may be performed through the interfaces and messages described below. In addition, SFN synchronization may be performed between DUs. For example, a global positioning system (GPS) or a precision time protocol (PTP) may be used.

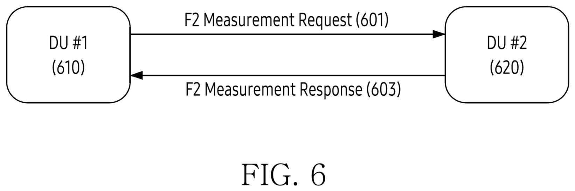

FIG. 6 illustrates an example of a first method of a measurement procedure in an interface between DUs. The first method is a method for measuring latency in an interface between DUs through two-way signaling between the DUs. The DUs may include DUs (e.g., DU #1 210-1, DU #2 210-2, DU #1 231, and DU #2 232) are described in FIGS. 2A to 2C and supporting a protocol of an RLC layer and a protocol of a MAC layer. For example, the DUs may include the O-DU 430 described in FIGS. 4A to 4B.

Referring to FIG. 6, an F2 interface may be configured between a DU #1 610 and a DU #2 620. Meanwhile, the F2 interface may be alternatively referred to by another term (e.g., M1, F3, MV, or XD) having the same technical meaning as an interface between the DUs. Since a DU is responsible for a MAC layer, it may perform a scheduling operation in the MAC layer. For the F2 interface, a protocol according to a streaming control transmission protocol (SCTP) and a user data protocol (UDP) (or a GTP, an L2, and/or an IP) may be used between the DUs. In a scenario in which two DUs are distinguished (e.g., in a deployment scenario of FIG. 2A, FIG. 2B, or FIG. 2C), scheduling efficiency may be achieved by transmitting and/or receiving parameters for scheduling through the interface between the DUs.

In operation 601, the DU #1 610 may transmit an F2 measurement request message to the DU #2 620. The F2 measurement request message may be used to measure latency required in the F2 interface, for example, in a communication interface between the DU #1 610 and the DU #2 620. According to an embodiment, the F2 measurement request message may include identification information related to the DU #1 610. For example, the F2 measurement request message may include base station information (e.g., Global gNB ID) of the DU #1 610 and identification information (e.g., gNB-DU ID) of the DU #1 610. According to an embodiment, the F2 measurement request message may further include identification information related to the DU #2 620. Identification information for the DU #2 620 may be previously obtained through an SCTP association of an interface. For example, the F2 measurement request message may include base station information (e.g., target Global gNB ID) of the DU #2 620 and identification information (e.g., gNB-DU ID) of the DU #2 620. According to an embodiment, the F2 measurement request message may include system time information (e.g., gNB system time). According to an embodiment, the F2 measurement request message may include information on a delay threshold (e.g., Delay threshold). The delay threshold may indicate an acceptable upper limit value for enabling communication over the F2 interface. For example, if a measured delay value exceeds the delay threshold, removal or release of the connection may be triggered, or the measurement request may be rejected. For example, the F2 measurement request message may have the following format.

[Table 3]

| IE/Group Name | Presence | Range | IE type and reference | Semantics description | Criticality | Assigned Criticality |
|---|---|---|---|---|---|---|
| Message Type | M | | | | | |
| Global gNB ID | M | | | | | |
| gNB-DU ID | M or O | | | Used for CU-DU separated architecture | | |
| gNB System Time | M or O | | X. **Time Stamp** | (T1) | | |
| Target Global gNB ID | 1V or O | | | | | |
| Target gNB-DU ID | M or O | | | | | |
| Delay threshold | M or O | | | Acceptable delay threshold for F2 link | | |

The 'Message Type' IE indicates a type of an F2 measurement request message. The 'Message Type' IE may indicate a message code (e.g., one of values from 0 to 255 defined in 8 bits) and a message type. The message type may be one of 'initiation message', 'successful outcome', and 'unsuccessful outcome'. The 'Global gNB ID' IE may include a global ID of a gNB of the DU #1 610. The 'Global gNB ID' IE may be used to globally identify the gNB of the DU #1 610. Identification information indicated by 'Global gNB ID' IE may consist of a PLMN ID and a gNB ID to which the gNB belongs. MCC and MNC may be identical to those included in a CGI. CGI may consist of a mobile network code (MNC), a mobile country code (MCC), a local area code (LAC), and a cell identity (CI). The 'gNB-DU ID' IE may be identification information for uniquely identifying the DU #1 610 within the gNB. The 'Target Global gNB ID' IE may include a global ID of a gNB of the DU #2 620. The 'Target gNB-DU ID' IE may be identification information for uniquely identifying the DU #2 620 within the gNB. The 'gNB System Time' IE may indicate a system value of a time (e.g., T1) at which the F2 measurement request message is transmitted from the DU #1 610. The 'Delay Threshold' IE may include a delay threshold indicating an acceptable upper limit value for enabling communication over the F2 interface.

'M' indicates a mandatory component for a message, and 'O' indicates an optional component for a message. 'M' and/or 'O' illustrated in the above- described table are exemplary and a specific description is not to be construed as limiting a specific embodiment of the present disclosure.

In operation 603, the DU #2 620 may transmit an F2 measurement response message to the DU #1 610. The F2 measurement response message may be used to measure latency required in the F2 interface, for example, in a communication interface between the DU #1 610 and the DU #2 620. According to an embodiment, the F2 measurement response message may include identification information related to the DU #2 620. For example, the F2 measurement response message may include base station information (e.g., Global gNB ID) of the DU #2 620 and identification information (e.g., gNB-DU ID) of the DU #2 620. According to an embodiment, the F2 measurement response message may further include identification information related to the DU #1 610. For example, the F2 measurement response message may include base station information (e.g., Target Global gNB ID) of the DU #1 610 and identification information (e.g., gNB-DU ID) of the DU #1 610. According to an embodiment, the F2 measurement response message may include system time information (e.g., gNB System Send Time, gNB System Received Time, gNB System Time). According to an embodiment, the F2 measurement response message may include information on a delay threshold (e.g., Delay threshold). The delay threshold may indicate an acceptable upper limit value for enabling communication over the F2 interface. For example, if the measured delay value exceeds the delay threshold, removal or release of the connection may be triggered. For example, the F2 measurement response message may have the following format.

[Table 4]

| IE/Group Name | Presence | Range | IE type and reference | Semantics description | Criticality | Assigned Criticality |
|---|---|---|---|---|---|---|
| Message Type | M | | | | | |
| Global gNB ID | **M** | | | | | |
| gNB-DU ID | **MorO** | | | | | |
| gNB System Send Time | **MorO** | | X. Time Stamp | T3 | | |
| gNB System Received Time | **MorO** | | X. Time Stamp | T2 | | |
| Target Global gNB ID | **MorO** | | | | | |
| Target gNB-DU ID | **MorO** | | | | | |
| Target gNB System Time | **MorO** | | X. Time Stamp | T1(If T1 is received before, it should be stored and returned to the target node) | | |
| Delay threshold | **MorO** | | | Acceptable delay threshold for F2 link | | |

The 'Message Type' IE indicates a type of an F2 measurement response message. The 'Message Type' IE may indicate a message code (e.g., one of values from 0 to 255 defined in 8 bits) and a message type. The message type may be one of 'initiation message', 'successful outcome', and 'unsuccessful outcome'. The 'Global gNB ID' IE may include a global ID of a gNB of the DU #2 620. The 'Global gNB ID' IE may be used to globally identify the gNB of the DU #2 620. Identification information indicated by 'Global gNB ID' IE may consist of a PLMN ID and a gNB ID to which the gNB belongs. The 'gNB-DU ID' IE may be identification information for uniquely identifying the DU #2 620 within the gNB. The 'Target Global gNB ID' IE may include a global ID of a gNB of the DU #1 610. The 'Target gNB-DU ID' IE may be identification information for uniquely identifying the DU #1 610 within the gNB. The 'gNB System Send Time' IE may indicate a system value of a time (e.g., T3) at which the F2 measurement response message is transmitted from the DU #2 620. The 'gNB System Received Time' IE may indicate a system value of a time (e.g., T2) at which the F2 measurement request message is received at the DU #1 610. The 'Target gNB System Time' IE may indicate a system value of a time (e.g., T1) at which the F2 measurement request message is transmitted from the DU #1 610. The system value may be obtained through information (e.g., 'gNB System Time' IE) received in operation 601. The 'Delay Threshold' IE may include a delay threshold indicating an acceptable upper limit value for enabling communication over the F2 interface.

'M' indicates a mandatory component for a message, and 'O' indicates an optional component for a message. 'M' and/or 'O' illustrated in the above- described table are exemplary and a specific description is not to be construed as limiting a specific embodiment of the present disclosure.

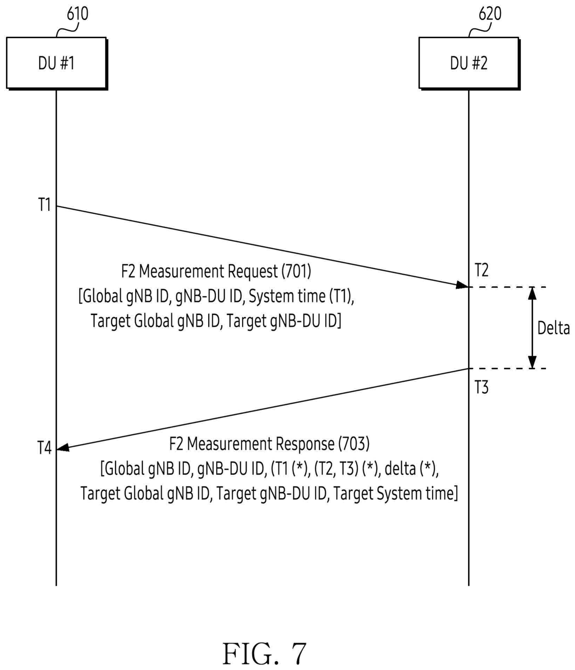

FIG. 7 is a diagram for describing signaling of parameters for delay measurement in an interface between DUs. In FIG. 7, based on the F2 measurement request message and the F2 measurement response message described through FIG. 6, operations of DUs (e.g., the DU #1 610 and the DU #2 620) for measuring delay (the delay may be referred to as backhaul delay or midhaul delay) between the DUs are described. The DUs may include DUs (e.g., DU #1 210-1, DU #2 210-2, DU #1 231, and DU #2 232) described in FIGS. 2A to 2C and supporting a protocol of an RLC layer and a protocol of a MAC layer. For example, the DUs may include the O-DU 430 described in FIGS. 4A to 4B. For a description of each message in FIG. 7, the description of the message in FIG. 6 may be referenced. In FIG. 7, a '*' mark indicates an optional inclusion relationship.

Referring to FIG. 7, in operation 701, the DU #1 610 may transmit the F2 measurement request message to the DU #2 620. The F2 measurement request message may be transmitted from the DU #1 610 at a first system time (e.g., T1). Through propagation delay, the F2 measurement request message may reach the DU #2 620 at a second system time (e.g., T2).

In operation 703, the DU #2 620 may transmit the F2 measurement response message to the DU #1 610. The DU #2 620 may transmit the F2 measurement response message to the DU #1 610 after a predetermined time (e.g., Delta) from the second system time (e.g., T2) at which the F2 measurement request message is received. The F2 measurement response message may be transmitted from the DU #2 620 at a third system time (e.g., T3). The F2 measurement response message may reach the DU #1 610 at a fourth system time (e.g., T4).

The DU #1 610 may measure a link delay of the F2 interface between the DU #1 610 and the DU #2 620. The DU #1 610 may measure the link delay based on the first system time, the fourth system time, and difference information. The first system time indicates a time at which the F2 measurement request message is transmitted from the DU #1 610, and the fourth system time indicates a time at which the F2 measurement response message is received at the DU #1 610. The difference information may be a difference between the third system time and the second system time. For example, the DU #1 610 may measure the link delay based on the following equation.

[Equation 1]

$$link\ delay = \frac{(T4 - T1) - Delta}{2}$$

T4 indicates the fourth system time, T1 indicates the first system time, and Delta indicates the difference information.

According to an embodiment, the difference information may be obtained from the second system time and the third system time included in the F2 measurement response message. For example, the DU #1 610 may obtain a 'gNB System Send Time' IE and a 'gNB System Received Time' IE from the F2 measurement response message having a format of Table 4. The 'gNB System Send Time' IE may indicate the third system time. The 'gNB System Received Time' IE may indicate the second system time. According to another embodiment, the difference information may be included in the F2 measurement response message. For example, the DU #1 610 may receive an F2 measurement response message including a value corresponding to a difference between the third system time and the second system time, unlike the format of Table 4. According to still another embodiment, the difference information may be pre-configured.

The DU #2 620 may measure a link delay of the F2 interface between the DU #1 610 and the DU #2 620. The DU #2 620 may measure the link delay based on a difference between the first system time and the second system time. If both the DU #1 610 and the DU #2 620 are time-synchronized and link delay from the DU #1 610 to the DU #2 620 and link delay from the DU #2 620 to the DU #1 610 are symmetric, the link delay may be obtained through one-way measurement. For example, the DU #2 620 may measure the link delay based on the following equation.

[Equation 2]

$$link\ delay = \frac{(T2 - T1)}{2}$$

T2 indicates the second system time and T1 indicates the first system time.

Although not illustrated in FIG. 7, delay condition analysis may be added to transmit the F2 measurement response message in operation 703. For example, the DU #2 620 may identify whether link delay measured according to Equation 2 is greater than or equal to a delay threshold. The DU #2 620 may transmit an F2 measurement failure message if the measured link delay is greater than or equal to the delay threshold. The DU #2 620 may transmit an F2 measurement response message according to operation 703 if the measured link delay is less than the delay threshold.

In FIG. 7, a method in which the DU #1 610 obtains link delay through two-way measurement and the DU #2 620 obtains link delay through one-way measurement is described. However, if link delay from the DU #1 610 to the DU #2 620 and link delay from the DU #2 620 to the DU #1 610 are not symmetric, the link delay obtained through one-way measurement may be inaccurate. In order to obtain the link delay through two-way measurement at the DU #2 620, a measurement procedure described through FIGS. 6 to 7 may also be triggered at the DU #2 620.

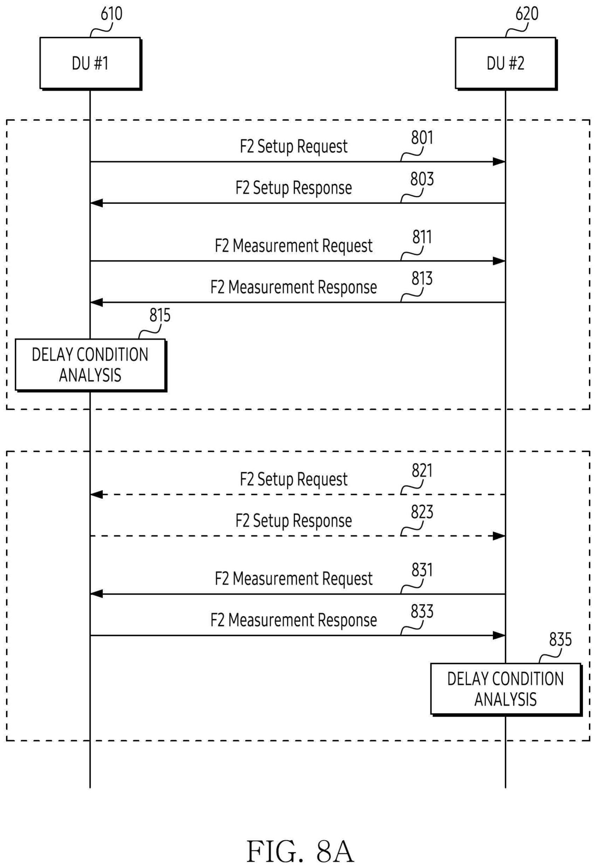

FIGS. 8A to 8C are diagrams illustrating signaling for delay measurement. The DUs (e.g., the DU #1 610 and the DU #2 620) may include DUs (e.g., DU #1 210-1, DU #2 210-2, DU #1 231, and DU #2 232) described in FIGS. 2A to 2C and supporting a protocol of an RLC layer and a protocol of a MAC layer. For example, the DUs may include the O-DU 430 described in FIGS. 4A to 4B.

In FIG. 8A, measurement procedures triggered in each of the DU #1 610 and the DU #2 620 are described.

Referring to FIG. 8A, in operation 801, the DU #1 610 may transmit an F2 setup request (F2 SETUP REQUEST) message to the DU #2 620. According to an embodiment, the F2 setup request message may include identification information (e.g., 'Global gNB ID' IE, 'gNB-DU ID' IE) of the DU #1 610. According to an embodiment, the F2 setup request message may transmit cell information of the DU #1 610. For example, the cell information may include cells capable of being supported through the DU #1 610 and configuration information for each cell.

In operation 803, the DU #2 620 may transmit an F2 setup response (F2 SETUP RESPONSE) message to the DU #1 610. According to an embodiment, the F2 setup response message may include identification information (e.g., 'Global gNB ID' IE, 'gNB-DU ID' IE) of the DU #2 620. According to an embodiment, the F2 setup response message may transmit cell information of the DU #2 620. For example, the cell information may include cells capable of being supported through the DU #2 620 and configuration information for each cell.

An F2 measurement procedure may be initiated through the above-described operation 801 and operation 803, after an F2 setup procedure is completed.

In operation 811, the DU #1 610 may transmit an F2 measurement request (F2 MEASUREMENT REQUEST) message to the DU #2 620. The descriptions of FIGS. 6 to 7 may be referenced for the F2 measurement request message. For example, the F2 measurement request message may include information on a time (e.g., T1) at which the F2 measurement request message is transmitted from the DU #1 610.

In operation 813, the DU #2 620 may transmit an F2 measurement response (F2 MEASUREMENT RESPONSE) message to the DU #1 610. The descriptions of FIGS. 6 to 7 may be referenced for the F2 measurement response message. For example, the F2 measurement response message may include information on a time (e.g., T2) at which the F2 measurement request message is received at the DU #2 620 and a time (e.g., T3) at which the F2 measurement response message is transmitted from the DU #2 620.

In operation 815, the DU #1 610 may analyze a delay condition. If the delay condition is not satisfied, the DU #1 610 may maintain a connection on the F2 interface. For example, if a measured delay is lower than the delay threshold, the DU #1 610 may maintain a connection between the DU #1 610 and the DU #2 620. Although not illustrated in FIG. 8A, if the measured delay is higher than the delay threshold, the DU #1 610 may attempt to release the connection between the DU #1 610 and the DU #2 620.

In the DU #1 610, measurement of the link delay may be possible through two-way measurement, but in the DU #2 620, measurement of the link delay through two-way measurement is difficult. As described above with reference to FIG. 7, since the DU #2 620 may perform only one-way measurement, the DU #2 620 may also initiate a measurement procedure in the same method as the DU #1 610.

In operation 821, the DU #2 620 may transmit an F2 setup request message to the DU #1 610. In operation 823, the DU #1 610 may transmit an F2 setup response message to the DU #2 620. Meanwhile, if the F2 setup procedure between the DU #1 610 and the DU #2 620 has been completed through operation 801 and operation 803, operations 821 and 823 may be omitted for simplification.

In operation 831, the DU #2 620 may transmit the F2 measurement request message to the DU #1 610. The descriptions of FIGS. 6 to 7 may be referenced for the F2 measurement request message. For example, the F2 measurement request message may include information on a time at which the F2 measurement request message in operation 831 is transmitted from the DU #2 620.

In operation 833, the DU #1 610 may transmit the F2 measurement response message to the DU #2 620. The descriptions of FIGS. 6 to 7 may be referenced for the F2 measurement response message. For example, the F2 measurement response message may include information on a time at which the F2 measurement request message in operation 831 is received at the DU #1 610 and a time at which the F2 measurement response message in operation 833 is transmitted from the DU #1 610.

In operation 835, the DU #2 620 may analyze a delay condition. If the delay condition is not satisfied, the DU #2 620 may maintain a connection on the F2 interface. For example, if a measured delay is lower than the delay threshold, the DU #2 620 may maintain a connection between the DU #2 620 and the DU #1 610. Although not illustrated in FIG. 8A, if the measured delay is higher than the delay threshold, the DU #2 620 may attempt to release the connection between the DU #2 620 and the DU #1 610.

In FIG. 8A, after a measurement procedure of the DU #1 610 is performed, a measurement procedure of the DU #2 620 is described, but embodiments of the present disclosure are not limited thereto. Operations 801 to 815 may be performed in parallel with operations 823 to 835. For example, an operation (e.g., operation 815) for determining whether to maintain a connection through analysis of a delay condition of the DU #1 610 may be independently performed from an operation (e.g., operation 835) for determining whether to maintain a connection through analysis of a delay condition of the DU #2 620. According to an embodiment, if the connection between the DU #1 610 and the DU #2 620 is released according to an analysis result of operation 835, the measurement procedure of the DU #1 610 may be terminated. For example, in response to the F2 measurement request message of the DU #1 610, the DU #2 620 may transmit an F2 measurement failure (MEASUREMENT FAILURE) message.

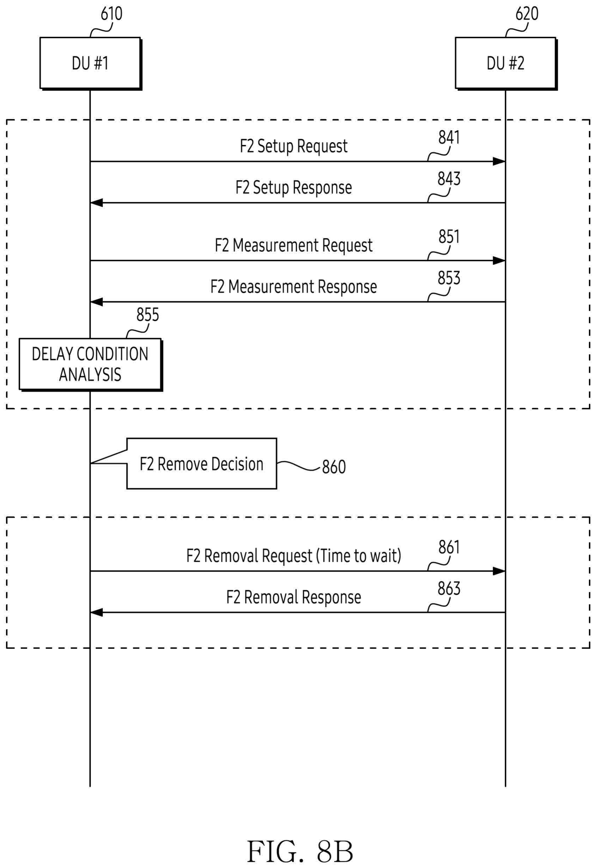

Referring to FIG. 8B, a measurement procedure and a removal procedure triggered in the DU #1 610 are described.

In operation 841, the DU #1 610 may transmit an F2 setup request (F2 SETUP REQUEST) message to the DU #2 620. According to an embodiment, the F2 setup request message may include identification information (e.g., 'Global gNB ID' IE, 'gNB-DU ID' IE) of the DU #1 610. According to an embodiment, the F2 setup request message may transmit cell information of the DU #1 610. For example, the cell information may include cells capable of being supported through the DU #1 610 and configuration information for each cell.

In operation 843, the DU #2 620 may transmit an F2 setup response (F2 SETUP RESPONSE) message to the DU #1 610. According to an embodiment, the F2 setup response message may include identification information (e.g., 'Global gNB ID' IE, 'gNB-DU ID' IE) of the DU #2 620. According to an embodiment, the F2 setup response message may transmit cell information of the DU #2 620. For example, the cell information may include cells capable of being supported through the DU #2 620 and configuration information for each cell.

An F2 measurement procedure may be initiated through the above-described operation 841 and operation 843, after the F2 setup procedure is completed.

In operation 851, the DU #1 610 may transmit an F2 measurement request (F2 MEASUREMENT REQUEST) message to the DU #2 620. The descriptions of FIGS. 6 to 7 may be referenced for the F2 measurement request message. For example, the F2 measurement request message may include information on a time (e.g., T1) at which the F2 measurement request message is transmitted from the DU #1 610.

In operation 853, the DU #2 620 may transmit an F2 measurement response (F2 MEASUREMENT RESPONSE) message to the DU #1 610. The descriptions of FIGS. 6 to 7 may be referenced for the F2 measurement response message. For example, the F2 measurement response message may include information on a time (e.g., T2) at which the F2 measurement request message is received at the DU #2 620 and a time (e.g., T3) at which the F2 measurement response message is transmitted from the DU #2 620.

In operation 855, the DU #1 610 may analyze a delay condition. For example, if a measured delay is lower than the delay threshold, the DU #1 610 may attempt to release a connection between the DU #1 610 and a DU #2 620.

In operation 860, the DU #1 610 may determine an F2 removal. For example, the DU #1 610 may initiate an F2 removal request procedure to release the connection between the DU #1 610 and a DU #2 620.

In operation 861, the DU #1 610 may transmit an F2 removal request (F2 REMOVAL REQUEST) message to the DU #2 620. The DU #1 610 may initiate a procedure by transmitting the F2 removal request message to the DU #2 620. Upon receiving the F2 removal request message, the DU #2 620 may determine to remove all resources related to a signaling connection. According to an embodiment, the DU #1 610 may transmit identification information (e.g., gNB identification information, CU identification information, DU identification information) of the DU #1 610 to the DU #2 620. According to an embodiment, the DU #1 610 may transmit cause information to the DU #2 620. For example, the F2 removal request message may have the following format.

[Table 5]

| IE/Group Name | Presence | Range | IE type and reference | Semantics description | Criticality | Assigned Criticality |
|---|---|---|---|---|---|---|
| Message Type | M | | | | YES | reject |
| Global gNB ID | M | | | | | |
| gNB-DU ID | MorO | | | | YES | reject |
| Time to Wait | M or O | | | | | |
| Cause | M | | (TS38.473 9.3.1.2 Cause + additional Causes (i.e., Long delay)) | | YES | ignore |
| Criticality Diagnostics | O | | | | | |

The 'Message Type' IE indicates a type of the F2 removal request message. The 'Message Type' IE may indicate a message code (e.g., one of values from 0 to 255 defined in 8 bits) and a message type. The message type may be one of 'initiation message', 'successful outcome', and 'unsuccessful outcome'. The 'Global gNB ID' IE may include a global ID of a gNB. The 'gNB-DU ID' IE may be identification information for uniquely identifying the DU #1 610 within the gNB. The 'Time to Wait' IE may indicate a waiting time until the next setup procedure is initiated after the removal procedure is completed. The 'Cause' IE may indicate a cause for initiating the F2 removal procedure. The 'Cause' IE may indicate a reason for a particular event in an F2AP protocol. For example, the 'Cause' IE may indicate a reason related to a delay (e.g., a delay exceeding a threshold) of the F2 interface.

In operation 863, the DU #2 620 may transmit an F2 removal response (F2 REMOVAL RESPONSE) message to the DU #1 610. For example, the F2 removal response message may have the following format.

[Table 6]

| IE/Group Name | Presen ce | Ran ge | IE type and reference | Semantics description | Critical ity | Assigned Criticality |
|---|---|---|---|---|---|---|
| Message Type | M | | | | YES | reject |
| Global gNB ID | M | | | | | |
| gN B-U ID | MorO | | | | YES | reject |
| Criticality Diagnostics | M or O | | | | YES | ignore |

The 'Message Type' IE indicates a type of the F2 removal response message. The 'Message Type' IE may indicate a message code (e.g., one of values from 0 to 255 defined in 8 bits) and a message type. The message type may be one of 'initiation message', 'successful outcome', and 'unsuccessful outcome'. The 'Global gNB ID' IE may include a global ID of a gNB. The 'gNB-DU ID' IE may be identification information for uniquely identifying the DU #2 620 within the gNB (or within a common gNB-CU). The 'Criticality Diagnostics' IE may be transmitted in a case that a part of a received message is not comprehended or is missed, or in a case that the message includes a logical error. The 'Criticality Diagnostics' IE may include information on an IE that is not comprehended or missed.

'M' indicates a mandatory component for a message, and 'O' indicates an optional component for a message. 'M' and/or 'O' illustrated in the above- described table are exemplary and a specific description is not to be construed as limiting a specific embodiment of the present disclosure.

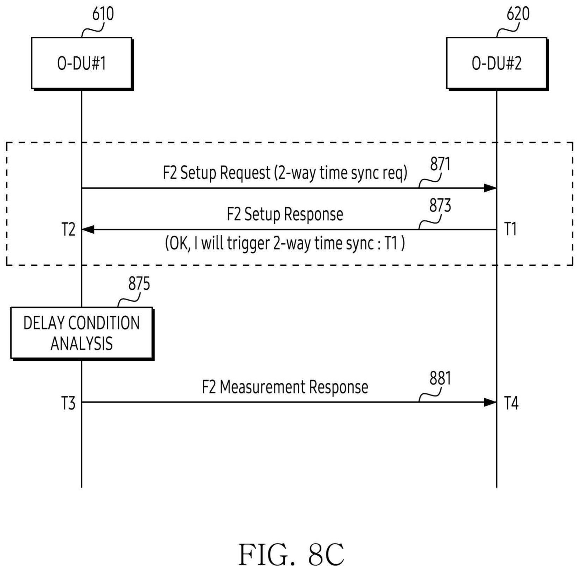

Referring to FIG. 8C, delay measurement using the F2 setup procedure at the DU #1 610 is described. In FIGS. 8A to 8B, it is described that the F2 measurement procedure is performed after the F2 setup procedure, but in FIG. 8C, a link delay of the F2 interface may be measured through messages of the F2 setup procedure.

In operation 871, the DU #1 610 may transmit an F2 setup request message to the DU #2 620. The F2 setup request message may include information for requesting delay measurement. For example, the F2 setup request message may include information for requesting delay measurement according to the first method. The first method indicates a delay measurement method using two-way signaling, described with reference to FIGS. 6 to 7. For example, the F2 setup request message may be configured as shown in the following table.

[Table 7]

| IE/Group Name | Presen ce | Range | IE type and reference | Semantics description | Criticali ty | Assigned Criticality |
|---|---|---|---|---|---|---|
| Message Type | M | | | | | |
| Global gNB ID | M | | | | | |
| gNB-DU ID | MorO | | | | | |
| Delay Measurement Request | MorO | (2-way delay mea-surement re-quired,..) | | | | |
| Delay threshold | MorO | | | Acceptable delay threshold for F2 link | | |

The 'Message Type' IE indicates a type of the F2 setup request message. The 'Global gNB ID' IE may include a global ID of a gNB. The 'gNB-DU ID' IE may be identification information for uniquely identifying the DU #1 610 within the gNB. The 'Delay Measurement Request' IE may indicate a request of a measurement procedure from the DU #1 610 to the DU #2 620. The 'Delay Threshold' IE may include a delay threshold indicating an acceptable upper limit value for enabling communication over the F2 interface.

In operation 873, the DU #2 620 may transmit an F2 setup response message to the DU #1 610. Through the F2 setup response message, the measurement procedure according to the first method described with reference to FIGS. 6 to 7 may be initiated. The F2 setup response message may include at least a portion of IEs of the F2 measurement request message mentioned through FIGS. 6 to 7. For example, the F2 setup response message may include a system value of a time (e.g., T1) at which the F2 setup response message is transmitted from the DU #2 620. In addition, for example, the F2 setup response message may include information on a delay threshold (e.g., Delay threshold). The delay threshold may indicate an acceptable upper limit value for enabling communication over the F2 interface. For example, the F2 setup response message may be configured as shown in the following table.

[Table 8]

| IE/Group Name | Presence | Range | IE type and reference | Semantics description | Criticality | Assigned Criticality |
|---|---|---|---|---|---|---|
| Message Type | M | | | | | |
| Global gNB ID | M | | | | | |
| gNB-DU ID | MorO | | | | | |
| gNB System Time | MorO | | X. Time Stamp | T1 | | |
| Delay thresh-old | MorO | | | Acceptable delay thresh-old for F2 link | | |

The 'Message Type' IE indicates a type of the F2 setup response message. The 'Global gNB ID' IE may include a global ID of a gNB. The 'gNB-DU ID' IE may be identification information for uniquely identifying the DU #2 620 within the gNB. The 'Delay Measurement Request' IE may indicate a request of a measurement procedure from the DU #1 610 to the DU #2 620. The 'gNB System Time' IE may indicate a system value of a time (e.g., T1) at which the F2 setup response message is transmitted from the DU #2 620. The 'Delay Threshold' IE may include a delay threshold indicating an acceptable upper limit value for enabling communication over the F2 interface.

'M' indicates a mandatory component for a message, and 'O' indicates an optional component for a message. 'M' and/or 'O' illustrated in the above- described table are exemplary and a specific description is not to be construed as limiting a specific embodiment of the present disclosure.

In operation 875, the DU #1 610 may perform a delay condition analysis. The DU #1 610 may perform the delay condition analysis through one-way measurement. The DU #1 610 may record a time (e.g., T2) at which the F2 setup response message is received. The DU #1 610 may obtain a link delay through a difference between the recorded time and a time (e.g., T1) at which the F2 setup response message is transmitted. The DU #1 610 may identify whether the link delay value is equal to or greater than the delay threshold. If the link delay value is equal to or greater than the delay threshold, the DU #1 610 may trigger a release of connection without proceeding additional procedures. However, if the link delay value is less than the delay threshold, the DU #1 610 may continue a measurement procedure of the link delay through an operation described below. For example, the DU #1 610 may perform operation 881.

In operation 881, the DU #2 620 may transmit an F2 measurement response message. According to an embodiment, the F2 measurement response message may include information (e.g., a system value) on a time (e.g., T2) at which the F2 setup response message is received and information (e.g., a system value) on a time (e.g., T3) at which the F2 measurement response message is transmitted. According to another embodiment, the F2 measurement response message may include information on a difference between the time (e.g., T2) at which the F2 setup response message is received and the time (e.g., T3) at which the F2 measurement response message is transmitted. According to still another embodiment, when the difference between the time (e.g., T2) at which the F2 setup response message is received and the time (e.g., T3) at which the F2 measurement response message is transmitted is pre-configured in the DU #1 610 and the DU #2 620, the F2 setup response message may include basic information (e.g., 'Message Type' IE, 'Global gNB ID' IE, 'gNB-DU ID' IE).

In FIG. 8C, an example is described in which delay measurement is requested to the DU #1 610 through the F2 setup response message instead of the F2 measurement request message. However, embodiments of the present disclosure are not limited thereto. To trigger a measurement according to the first method, an F2 setup request message may be used. For example, the F2 setup request message and the F2 setup response message may respectively replace the F2 measurement request message and the F2 measurement response message. As an example, the F2 setup request message may include information on a first system time (e.g., T1). The F2 setup response message may include information on a second system time (e.g., T2) and a third system time (e.g., T3).

In FIGS. 6 to 8C, a method in which the DU #1 610 obtains a link delay through two-way measurement, which is the first method, is described. However, if there is no situation in which it is triggered at both sides, one-way measurement exists. For example, if the link delay from the DU #1 610 to the DU #2 620 and the link delay from the DU #2 620 to the DU #1

EP 4 697 789 A1

610 are not symmetric, the link delay obtained through one-way measurement may be inaccurate. Hereinafter, in the present disclosure, methods for obtaining a link delay through three-way measurement are described.

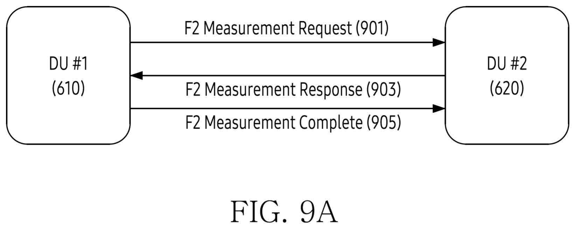

FIG. 9A illustrates an example of a second method of a measurement procedure in an interface between DUs. The second method is a method of measuring latency in an interface between DUs through three-way signaling between the DUs. The DUs (e.g., DU #1 610 and DU #2 620) may include DUs (e.g., DU #1 210-1, DU #2 210-2, DU #1 231, and DU #2 232) described in FIGS. 2A to 2C and supporting a protocol of an RLC layer and a protocol of a MAC layer. For example, the DUs may include the O-DU 430 described in FIGS. 4A to 4B.

Referring to FIG. 9A, in operation 901, the DU #1 610 may transmit an F2 measurement request message to the DU #2 620. The F2 measurement request message may be used for measuring latency required in an F2 interface, for example, a communication interface between the DU #1 610 and the DU #2 620. According to an embodiment, the F2 measurement request message may include identification information related to the DU #1 610. For example, the F2 measurement request message may include base station information (e.g., Global gNB ID) of the DU #1 610 and identification information (e.g., gNB-DU ID) of the DU #1 610. According to an embodiment, the F2 measurement request message may further include identification information related to the DU #2 620. The identification information on the DU #2 620 may be previously obtained through an SCTP association of an interface. For example, the F2 measurement request message may include base station information (e.g., Target Global gNB ID) of the DU #2 620 and identification information (e.g., gNB-DU ID) of the DU #2 620. According to an embodiment, the F2 measurement request message may include system time information (e.g., gNB System Time). According to an embodiment, the F2 measurement request message may include information on a delay threshold (e.g., Delay threshold). The delay threshold may indicate an acceptable upper limit value for enabling communication over the F2 interface. For example, if a measured delay value exceeds the delay threshold, removal or release of the connection may be triggered. For example, the F2 measurement request message may have a format as shown below.

[Table 9]

| IE/Group Name | Presence | Range | IE type and reference | Semantics description | Criticality | Assigned Criticality |
|---|---|---|---|---|---|---|
| Message Type | M | | | | | |
| Global gNB ID | M | | | | | |
| gNB-DU ID | MorO | | | Used for CU-DU separated architecture | | |
| gNB System Time | MorO | | X. Time Stamp | (T1) | | |
| Target Global gNB ID | MorO | | | | | |
| Target gNB-DU ID | MorO | | | | | |
| Delay threshold | MorO | | | Acceptable delay threshold for F2 link | | |

The 'Message Type' IE indicates a type of the F2 measurement request message. The 'Message Type' IE may indicate a message code (e.g., one of values from 0 to 255 defined in 8 bits) and a message type. The message type may be one of 'initiation message', 'successful outcome', and 'unsuccessful outcome'. The 'Global gNB ID' IE may include a global ID of a gNB of the DU #1 610. The 'Global gNB ID' IE may be used to globally identify the gNB of the DU #1 610. Identification information indicated by the 'Global gNB ID' IE may consist of a PLMN ID and a gNB ID to which the gNB belongs. MCC and MNC may be identical to those included in a CGI. The CGI may consist of a mobile network code (MNC), a mobile country code (MCC), a local area code (LAC), and a cell identity (CI). The 'gNB-DU ID' IE may be identification information for uniquely identifying the DU #1 610 within the gNB. The 'Target Global gNB ID' IE may include a global ID of a gNB of the DU #2 620. The 'Target gNB-DU ID' IE may be identification information for uniquely identifying the DU #2 620 within the gNB. The 'gNB System Time' IE may indicate a system value of a time (e.g., T1) at which the F2 measurement request message is transmitted from the DU #1 610. The 'Delay Threshold' IE may include a delay threshold indicating an acceptable upper limit value for enabling communication over the F2 interface. 'M' indicates a mandatory component for a message, and 'O' indicates an optional component for a message. 'M' and/or 'O' illustrated in the above-described table are exemplary and a specific description is not to be construed as limiting a specific embodiment of the present disclosure.

In operation 903, the DU #2 620 may transmit an F2 measurement response message to the DU #1 610. The F2

18

measurement response message may be used for measuring a latency required in an F2 interface, for example, a communication interface between the DU #1 610 and the DU #2 620. According to an embodiment, the F2 measurement response message may include identification information related to the DU #2 620. For example, the F2 measurement response message may include base station information (e.g., Global gNB ID) of the DU #2 620 and identification information (e.g., gNB-DU ID) of the DU #2 620. According to an embodiment, the F2 measurement response message may further include identification information related to the DU #1 610. For example, the F2 measurement response message may include base station information (e.g., Target Global gNB ID) of the DU #1 610 and identification information (e.g., gNB-DU ID) of the DU #1 610. According to an embodiment, the F2 measurement response message may include system time information (e.g., gNB System Send Time, gNB System Received Time, and gNB System Time). According to an embodiment, the F2 measurement response message may include information on a delay threshold (e.g., Delay threshold). The delay threshold may indicate an acceptable upper limit value for enabling communication over the F2 interface. For example, if a measured delay value exceeds the delay threshold, removal or release of the connection may be triggered. For example, the F2 measurement response message may have the following format.

[Table 10]

| IE/Group Name | Presence | Range | IE type and reference | Semantics description | Criticality | Assigned Criticality |
|---|---|---|---|---|---|---|
| Message Type | M | | | | | |
| Global gNB ID | **M** | | | | | |
| gNB-DU ID | **MorO** | | | | | |
| gNB System Send Time | **MorO** | | X. Time Stamp | T3 | | |
| gNB System Received Time | **MorO** | | X. Time Stamp | T2 | | |
| Target Global gNB ID | **MorO** | | | | | |
| Target gNB-DU ID | **MorO** | | | | | |
| Target gNB System Time | **MorO** | | X. Time Stamp | T1(If T1 is received before, it should be stored and returned to the target node) | | |
| Delay threshold | **MorO** | | | Acceptable delay threshold for F2 link | | |

The 'Message Type' IE may indicate a type of the F2 measurement response message. The 'Message Type' IE may indicate a message code (e.g., one of values from 0 to 255 defined in 8-bits) and a message type. The message type may be one of 'initiation message', 'successful outcome', and 'unsuccessful outcome'. The 'Global gNB ID' IE may include a global ID of a gNB of the DU #2 620. The 'Global gNB ID' IE may be used to globally identify the gNB of the DU #2 620. Identification information indicated by the 'Global gNB ID' IE may consist of a PLMN ID and a gNB ID to which the gNB belongs. The 'gNB-DU ID' IE may be identification information for uniquely identifying the DU #2 620 within the gNB. The 'Target Global gNB ID' IE may include a global ID of a gNB of the DU #1 610. The 'Target gNB-DU ID' IE may be identification information for uniquely identifying the DU #1 610 within the gNB. The 'gNB System Send Time' IE may indicate a system value of a time (e.g., T3) at which the F2 measurement response message is transmitted from the DU #2 620. The 'gNB System Received Time' IE may indicate a system value of a time (e.g., T2) at which the F2 measurement request message is received at the DU #2 620. The 'Target gNB System Time' IE may indicate a system value of a time (e.g., T1) at which the F2 measurement request message is transmitted from the DU #1 610. The system value may be obtained through information (e.g., the 'gNB System Time' IE) received in operation 601. The 'Delay Threshold' IE may include a delay threshold indicating an acceptable upper limit value for enabling communication over the F2 interface.
'M' indicates a mandatory component for a message, and 'O' indicates an optional component for a message. 'M' and/or 'O' illustrated in the above- described table are exemplary and a specific description is not to be construed as limiting a specific embodiment of the present disclosure.

In operation 905, the DU #1 610 may transmit an F2 measurement complete (Measurement Complete) message to the DU #2 620. For the three-way measurement, the DU #1 610 may transmit the F2 measurement complete message. The DU #1 610 may transmit the F2 measurement complete message to enable the DU #2 620 to obtain a link delay through a two-way measurement.

According to an embodiment, the F2 measurement complete message may include identification information related to the DU #1 610. For example, the F2 measurement complete message may include base station information (e.g., Global gNB ID) of the DU #1 610 and identification information (e.g., gNB-DU ID) of the DU #1 610. According to an embodiment, the F2 measurement complete message may further include identification information related to the DU #2 620. For example, the F2 measurement complete message may include base station information (e.g., Target Global gNB ID) of the DU #2 620 and identification information (e.g., gNB-DU ID) of the DU #2 620. According to an embodiment, the F2 measurement complete message may include system time information (e.g., gNB System Send Time, gNB System Received Time, and Target gNB System Time). According to an embodiment, the F2 measurement complete message may include information on a delay threshold (e.g., Delay threshold). For example, the F2 measurement complete message may have the following format.

[Table 11]

| IE/Group Name | Presence | Range | IE type and reference | Semantics description | Criticality | Assigned Criticality |
|---|---|---|---|---|---|---|
| Message Type | M | | | | | |
| Global gNB ID | **M** | | | | | |
| gNB-DU ID | **MorO** | | | | | |
| gNB System Send Time | **MorO** | | X. Time Stamp | T5 | | |
| gNB System Received Time | **MorO** | | X. Time Stamp | T4 | | |
| Target Global gNB ID | **MorO** | | | | | |
| Target gNB-DU ID | **MorO** | | | | | |
| Target gNB System Time | **MorO** | | X. Time Stamp | T3(If T3 is received before, it should be stored and returned to the target node) | | |
| Delay threshold | **MorO** | | | Acceptable delay threshold for F2 link | | |

The 'Message Type' IE may indicate a type of the F2 measurement complete message. The 'Message Type' IE may indicate a message code (e.g., one of values from 0 to 255 defined in 8-bits) and a message type. The 'Global gNB ID' IE may include a global ID of a gNB of the DU #1 610. The 'Global gNB ID' IE may be used to globally identify the gNB of the DU #1 610. Identification information indicated by the 'Global gNB ID' IE may consist of a PLMN ID and a gNB ID to which the gNB belongs. The 'gNB-DU ID' IE may be identification information for uniquely identifying the DU #1 610 within the gNB. The 'Target Global gNB ID' IE may include a global ID of a gNB of the DU #2 620. The 'Target gNB-DU ID' IE may be identification information for uniquely identifying the DU #2 620 within the gNB. The 'gNB System Send Time' IE may indicate a system value of a time (e.g., T5) at which the F2 measurement complete message is transmitted from the DU #2 620. The 'gNB System Received Time' IE may indicate a system value of a time (e.g., T4) at which the F2 measurement response message is received at the DU #1 610. The 'Target gNB System Time' IE may indicate a system value of a time (e.g., T3) at which the F2 measurement request message is transmitted from the DU #2 620. The system value may be obtained through information (e.g., the 'gNB System Time' IE) received in operation 903. The 'Delay Threshold' IE may include a delay threshold indicating an acceptable upper limit value for enabling communication over the F2 interface. 'M' indicates a mandatory component for a message, and 'O' indicates an optional component for a message. 'M' and/or 'O' illustrated in the above- described table are exemplary and a specific description is not to be construed as limiting a specific embodiment of the present disclosure.

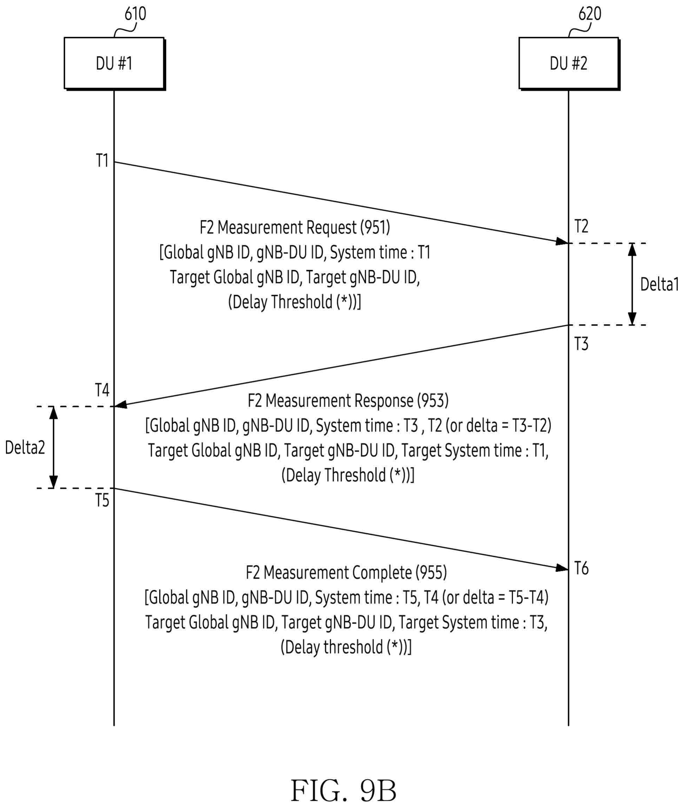

FIG. 9B is a diagram for describing signaling of parameters for delay measurement in an interface between DUs. In FIG. 9B, operations of DUs (e.g., DU #1 610 and DU #2 620) for measuring a delay between DUs are described based on the F2 measurement request message, the F2 measurement response message, and the F2 measurement complete message described through FIG. 9A. The DUs may include DUs (e.g., DU #1 210-1, DU #2 210-2, DU #1 231, and DU #2 232) described in FIGS. 2A to 2C and supporting a protocol of an RLC layer and a protocol of a MAC layer. For example, the DUs may include the O-DU 430 described in FIGS. 4A to 4B. For a description of each message in FIG. 9B, the descriptions of the messages in FIG. 9A may be referenced. In FIG. 9B, the '*' mark indicates an optional inclusion relationship.

Referring to FIG. 9B, in operation 951, the DU #1 610 may transmit an F2 measurement request message to the DU #2 620. The F2 measurement request message may be transmitted from the DU #1 610 at a first system time (e.g., T1). Through propagation delay, the F2 measurement request message may reach the DU #2 620 at a second system time (e.g., T2).

In operation 953, the DU #2 620 may transmit an F2 measurement response message to the DU #1 610. The DU #2 620 may transmit the F2 measurement response message to the DU #1 610 after a certain time (e.g., Delta1) from a second system time (e.g., T2) at which the F2 measurement request message is received. The F2 measurement response message may be transmitted from the DU #2 620 at a third system time (e.g., T3). The F2 measurement response message may reach the DU #1 610 at a fourth system time (e.g., T4).

In operation 955, the DU #1 610 may transmit an F2 measurement complete message to the DU #2 620. The DU #1 610 may transmit the F2 measurement complete message to the DU #2 620 after a certain time (e.g., Delta2) from the fourth system time (e.g., T4) at which the F2 measurement request message is received. The F2 measurement complete message may be transmitted from the DU #1 610 at a fifth system time (e.g., T5). The F2 measurement complete message may reach the DU #2 620 at a sixth system time (e.g., T6).

The DU #1 610 may measure a link delay of the F2 interface between the DU #1 610 and the DU #2 620. The DU #1 610 may measure the link delay based on a first system time, a fourth system time, and first difference information. The first system time indicates a time at which the F2 measurement request message is transmitted from the DU #1 610, and the fourth system time indicates a time at which the F2 measurement response message is received at the DU #1 610. The first difference information may be a difference between the third system time and the second system time. For example, the DU #1 610 may measure the link delay based on the following equation.

[Equation 3]

$$link\ delay = \frac{(T4 - T1) - Delta1}{2}$$

T4 indicates a fourth system time, T1 indicates a first system time, and Delta1 indicates the first difference information. The fourth system time and the first system time indicate system times recorded at the DU #1 610.

According to an embodiment, the first difference information may be obtained from the second system time and the third system time included in the F2 measurement response message. For example, the DU #1 610 may obtain 'gNB System Send Time' IE and 'gNB System Received Time' IE from the F2 measurement response message having a format of Table 10. The 'gNB System Send Time' IE may indicate the third system time. The 'gNB System Received Time' IE may indicate the second system time. According to another embodiment, the first difference information may be included in the F2 measurement response message. For example, unlike the format of Table 10, the DU #1 610 may receive the F2 measurement response message including a value corresponding to a difference between the third system time and the second system time. According to still another embodiment, the first difference information may be pre-configured.

The DU #2 620 may measure a link delay of the F2 interface between the DU #1 610 and the DU #2 620. The DU #2 620 may measure the link delay based on a third system time, a sixth system time, and second difference information. The third system time indicates a time at which the F2 measurement response message is transmitted from the DU #2 620, and the sixth system time indicates a time at which the F2 measurement complete message is received at the DU #2 620. The second difference information may be a difference between the fourth system time and the fifth system time. For example, the DU #2 620 may measure the link delay based on the following equation.

[Equation 4]

$$link\ delay = \frac{(T6 - T3) - Delta2}{2}$$

T3 indicates a third system time, T6 indicates a sixth system time, and Delta2 indicates the second difference information. The third system time and the sixth system time indicate system times recorded at the DU #2 620.

According to an embodiment, the second difference information may be obtained from the fourth system time and the fifth system time included in the F2 measurement response message. For example, the DU #2 620 may obtain 'gNB System Send Time' IE and 'gNB System Received Time' IE from the F2 measurement complete message having a format of Table 11. The 'gNB System Send Time' IE may indicate the fifth system time. The 'gNB System Received Time' IE may indicate the fourth system time. According to another embodiment, the second difference information may be included in the F2 measurement complete message. For example, unlike the format of Table 10, the DU #1 610 may receive the F2 measurement complete message including a value corresponding to a difference between the fifth system time and the fourth system time. According to still another embodiment, the second difference information may be pre-configured.

Although not illustrated in FIG. 9B, a delay condition analysis may be added to transmit the F2 measurement complete message in operation 953. For example, the DU #1 610 may identify whether a link delay measured according to Equation 3 is equal to or greater than a delay threshold. If the measured link delay is equal to or greater than the delay threshold, the DU #1 610 may transmit an F2 measurement failure message instead of the F2 measurement complete message. If the measured link delay is less than the delay threshold, the DU #1 610 may transmit the F2 measurement complete message according to operation 953. In the same manner, the DU #2 620 may identify whether a link delay measured according to Equation 4 is equal to or greater than a delay threshold. If the measured link delay is equal to or greater than the delay threshold, the DU #2 620 may trigger removal or release of the F2 connection. If the measured link delay is less than the delay threshold, the DU #2 620 may maintain the F2 connection.

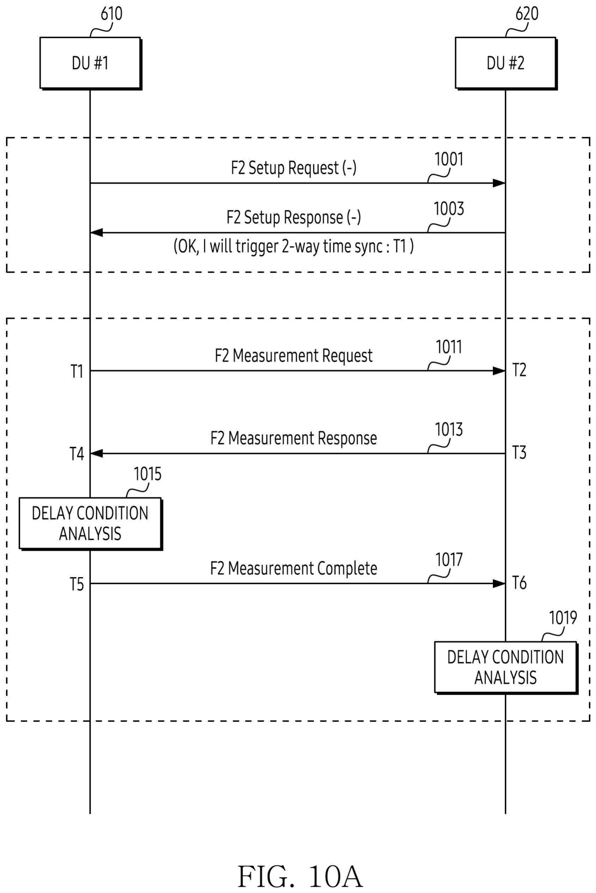

FIGS. 10A to 10C are diagrams illustrating signaling for delay measurement. The DUs (e.g., the DU #1 610 and the DU #2 620) may include DUs (e.g., the DU #1 210-1, the DU #2 210-2, the DU #1 231, and the DU #2 232) described in FIGS. 2A to 2C and supporting a protocol of an RLC layer and a protocol of a MAC layer. For example, the DUs may include the O-DU 430 described in FIGS. 4A to 4B.

Referring to FIG. 10A, in operation 1001, the DU #1 610 may transmit an F2 setup request message to the DU #2 620. According to an embodiment, the F2 setup request message may include identification information (e.g., the gNB-DU ID of the DU #1 610 and the global ID of the gNB of the DU #1 610) for the DU #1 610 and/or identification information (e.g., the gNB-DU ID of the DU #2 620 and the global ID of the gNB of the DU #2 620) for the DU #2 620 without any additional field for triggering a measurement of link delay. The DU #2 620 may receive the F2 setup request message. The DU #2 620 may identify, based on the F2 setup request message without the additional field, that an F2 measurement procedure is initiated after completion of an F2 setup procedure.

In operation 1003, the DU #2 620 may transmit an F2 setup response message to the DU #1 610. According to an embodiment, the F2 setup response message may include identification information (e.g., the gNB-DU ID of the DU #1 610 and the global ID of the gNB of the DU #1 610) for the DU #1 610 and/or identification information (e.g., the gNB-DU ID of the DU #2 620 and the global ID of the gNB of the DU #2 620) for the DU #2 620 without any additional field for triggering a measurement of link delay. The DU #1 610 may receive the F2 setup response message. The DU #1 610 may identify, based on the F2 setup response message without the additional field, that an F2 measurement procedure is initiated after completion of an F2 setup procedure.

In operation 1011, the DU #1 610 may transmit an F2 measurement request message to the DU #2 620. The descriptions of FIGS. 9A to 9B may be referenced for the F2 measurement request message. For example, the F2 measurement request message may include a first system time (e.g., T1), which is time information at which the F2 measurement request message is transmitted from the DU #1 610.

In operation 1013, the DU #2 620 may transmit an F2 measurement response message to the DU #1 610. The descriptions of FIGS. 9A to 9B may be referenced for the F2 measurement response message. For example, the F2 measurement response message may include a second system time (e.g., T2), which is time information at which the F2 measurement request message is received at the DU #2 620, and a third system time (e.g., T3), which is time information at which the F2 measurement response message is transmitted from the DU #2 620. For another example, the F2 measurement response message may include information on a difference between the second system time (e.g., T2) at which the F2 measurement request message is received at the DU #2 620 and the third system time (e.g., T3), which is time information at which the F2 measurement response message is transmitted from the DU #2 620.

In operation 1015, the DU #1 610 may perform a delay condition analysis. The DU #1 610 may measure a link delay based on a time (e.g., T1) at which the F2 measurement request message is transmitted from the DU #1 610, a time (e.g., T4) at which the F2 measurement response message is received, and information (e.g., T2, T3, T3-T2) included in the F2 measurement response message. The DU #1 610 may perform the delay condition analysis based on a value measured as the link delay. For example, the DU #1 610 may identify whether the link delay is equal to or greater than a delay threshold. In a case that the link delay is equal to or greater than the delay threshold, the DU #1 610 may no longer perform a measurement procedure. The DU #1 610 may perform an F2 removal procedure for releasing an F2 connection. In a case that the link delay is less than the delay threshold, the DU #1 610 may perform operation 1017 described below.

In operation 1017, the DU #1 610 may transmit an F2 measurement complete message to the DU #2 620. The descriptions of FIGS. 9A to 9B may be referenced for the F2 measurement complete message. For example, the F2 measurement complete message may include a fourth system time (e.g., T4), which is time information at which the F2 measurement response message is received at the DU #1 610, and a fifth system time (e.g., T5), which is time information at which the F2 measurement complete message is transmitted from the DU #1 610. For another example, the F2 measurement response message may include information on a difference between the fourth system time (e.g., T4), which is time information at which the F2 measurement response message is received at the DU #1 610 and the fifth system time (e.g., T5), which is time information at which the F2 measurement complete message is transmitted from the DU #1 610.

In operation 1019, the DU #2 620 may perform a delay condition analysis. The DU #2 620 may measure a link delay based on a time (e.g., T3) at which the F2 measurement response message is transmitted from the DU #2 620, a time (e.g., T6) at which the F2 measurement complete message is received, and information (e.g., T4, T5, T5-T4) included in the F2 measurement response message. The DU #2 620 may perform the delay condition analysis based on a value measured as the link delay. For example, the DU #2 620 may identify whether the link delay is equal to or greater than a delay threshold. In a case that the link delay is equal to or greater than the delay threshold, the DU #2 620 may no longer perform the measurement procedure. The DU #2 620 may perform an F2 removal procedure for releasing an F2 connection. In a case that the link delay is less than the delay threshold, the DU #2 620 may continuously perform communication with the DU #1 610 through the F2 interface.

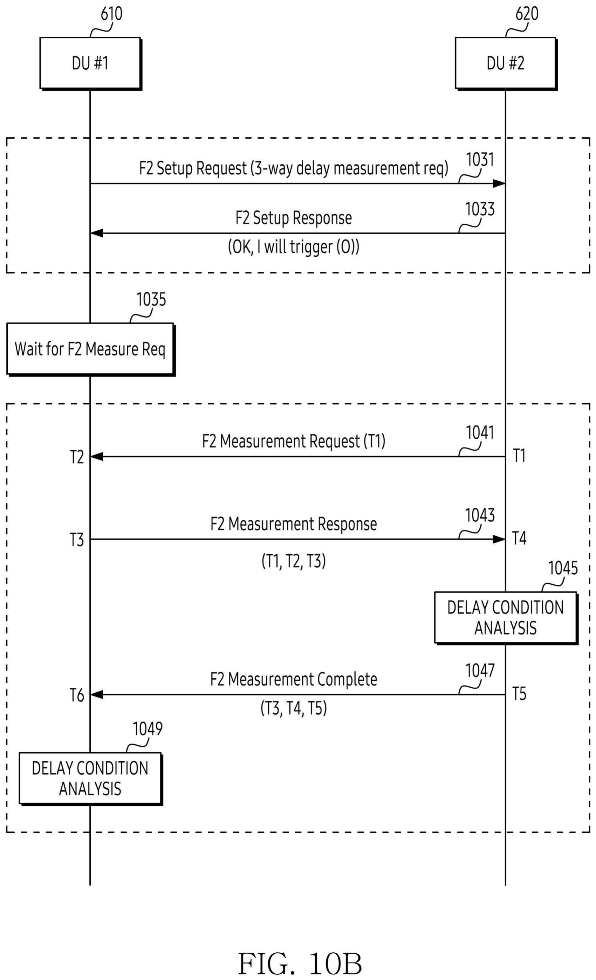

Referring to FIG. 10B, in operation 1031, the DU #1 610 may transmit an F2 setup request message to the DU #2 620. The F2 setup request message may include information for requesting delay measurement. For example, the F2 setup request message may include information for requesting delay measurement according to the second method. The second method indicates a delay measurement method using two-way signaling described through FIGS. 9A to 9B. For example, the F2 setup request message may be configured as shown in the following table.

[Table 12]

| IE/Group Name | Presence | Range | IE type and reference | Semantics description | Criticality | Assigned Criticality |
|---|---|---|---|---|---|---|
| Message Type | M | | | | | |
| Global gNB ID | M | | | | | |
| gNB-DU ID | MorO | | | | | |
| Delay Measurement Request | M or O | (3-way delay measurement required,..) | | | | |
| Delay threshold | MorO | | | Acceptable delay threshold for F2 link | | |

The 'Message Type' IE may indicate a type of the F2 setup request message. The 'Global gNB ID' IE may include a global ID of a gNB. The 'gNB-DU ID' IE may be identification information for uniquely identifying the DU #1 610 within the gNB. The 'Delay Measurement Request' IE may indicate a request of a measurement procedure from the DU #1 610 to the DU #2 620. The 'Delay Threshold' IE may include a delay threshold indicating an acceptable upper limit value for enabling communication over the F2 interface.

'M' indicates a mandatory component for a message, and 'O' indicates an optional component for a message. 'M' and/or 'O' illustrated in the above- described table are exemplary and a specific description is not to be construed as limiting a specific embodiment of the present disclosure.

In operation 1033, the DU #2 620 may transmit an F2 setup response message to the DU #1 610. The F2 setup response message may include trigger information in response to the F2 setup request message including the 'Delay Measurement Request' IE. The trigger information may be used to respond to the measurement request of the DU #1 610. According to an embodiment, the trigger information may indicate that a measurement procedure is initiated by the DU #2 620. For example, the DU #2 620 may be waiting without transmitting the F2 setup request message until an overload is mitigated or a designated waiting time (e.g., 'Time to Wait' IE of Table 5) expires. In a case that the DU #2 620 receives, before transmitting the F2 setup request message, an F2 setup request message including the measurement request from another DU (e.g., the DU #1 610), the DU #2 620 may determine whether to accept the measurement request. For example, in a case that the DU #2 620 accepts the measurement request, the DU #2 620 may generate the trigger information. The DU #2 620 may transmit the F2 setup response message including the generated trigger information to the DU #1 610. For another example, in a case that the DU #2 620 does not accept the measurement request, the DU #2 620 may transmit the F2 setup response message without the trigger information or together with information for requesting a trigger to the DU #1 610. Hereinafter, it is assumed that the F2 setup response message including the trigger information is transmitted.

In operation 1035, the DU #1 610 may wait for an F2 measurement request message. The DU #1 610 may identify the trigger information from the F2 setup response message. The DU #1 610 may identify, based on the trigger information, that the DU #2 620 will transmit the F2 measurement request message. The DU #1 610 may wait for the F2 measurement request message to be transmitted from the DU #2 620.

In operation 1041, the DU #2 620 may transmit an F2 measurement request message to the DU #1 610. The descriptions of FIGS. 9A to 9B may be referenced for the F2 measurement request message. For example, the F2 measurement request message may include first system time (e.g., T1), which is time information at which the F2 measurement request message is transmitted from the DU #2 620.

In operation 1043, the DU #1 610 may transmit an F2 measurement response message to the DU #2 620. The descriptions of FIGS. 9A to 9B may be referenced for the F2 measurement response message. For example, the F2 measurement response message may include second system time (e.g., T2), which is time information at which the F2 measurement request message is received at the DU #1 610, and third system time (e.g., T3), which is time information at which the F2 measurement response message is transmitted from the DU #1 610. For another example, the F2 measurement response message may include information on a difference between the second system time (e.g., T2), which is time information at which the F2 measurement request message is received at the DU #1 610, and the third system time (e.g., T3), which is time information at which the F2 measurement response message is transmitted.

In operation 1045, the DU #2 620 may perform a delay condition analysis. The DU #2 620 may measure a link delay based on a time (e.g., T1) at which the F2 measurement request message is transmitted from the DU #2 620, a time (e.g., T4) at which the F2 measurement response message is received, and information (e.g., T2, T3, T3-T2) included in the F2 measurement response message. The DU #2 620 may perform the delay condition analysis based on a value measured as the link delay. For example, the DU #2 620 may identify whether the link delay is equal to or greater than a delay threshold. If the link delay is equal to or greater than the delay threshold, the DU #2 620 may no longer perform the measurement procedure. The DU #2 620 may perform an F2 removal procedure to release the F2 connection. If the link delay is less than the delay threshold, the DU #2 620 may perform an operation 1047 described below.

In operation 1047, the DU #2 620 may transmit an F2 measurement complete message to the DU #1 610. The descriptions of FIGS. 9A to 9B may be referenced for the F2 measurement complete message. For example, the F2 measurement complete message may include a fourth system time (e.g., T4), which is time information at which the F2 measurement response message is received at the DU #2 620, and a fifth system time (e.g., T5), which is time information at which the F2 measurement complete message is transmitted from the DU #2 620. For another example, the F2 measurement complete message may include information on a difference between the fourth system time (e.g., T4), which is time information at which the F2 measurement response message is received at the DU #2 620, and the fifth system time (e.g., T5), which is time information at which the F2 measurement complete message is transmitted from the DU #2 620.

In operation 1049, the DU #1 610 may perform a delay condition analysis. The DU #1 610 may measure a link delay based on a time (e.g., T3) at which the F2 measurement response message is transmitted from the DU #1 610, a time (e.g., T6) at which the F2 measurement complete message is received, and information (e.g., T4, T5, T5-T4) included in the F2 measurement response message. The DU #1 610 may perform the delay condition analysis based on a value measured as the link delay. For example, the DU #1 610 may identify whether the link delay is greater than or equal to a delay threshold. If the link delay is greater than or equal to the delay threshold, the DU #1 610 may no longer perform the measurement procedure. The DU #1 610 may perform an F2 removal procedure to release the F2 connection. If the link delay is less than the delay threshold, the DU #1 610 may continuously perform communication with the DU #2 620 through the F2 interface.

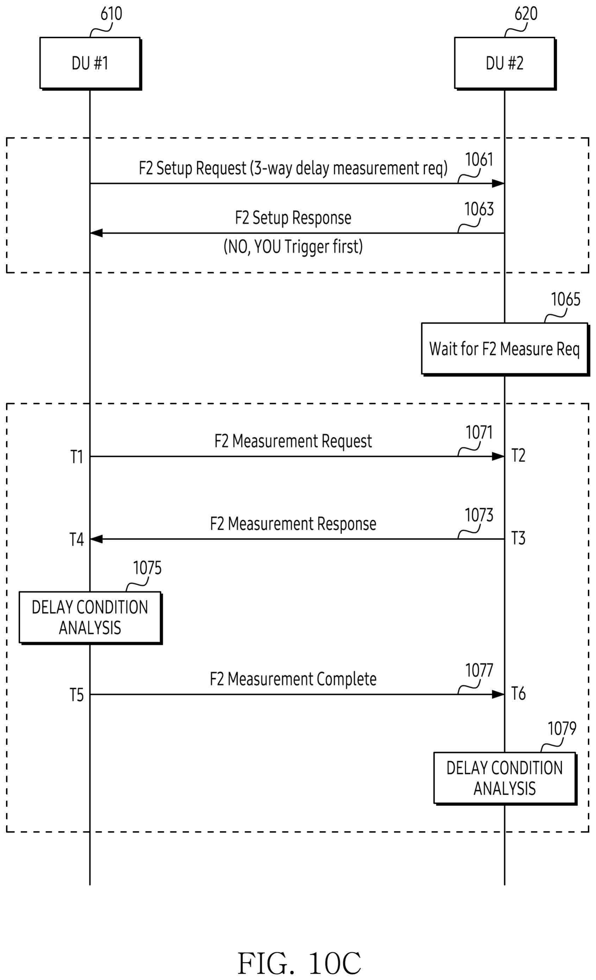

Referring to FIG. 10C, in operation 1061, the DU #1 610 may transmit an F2 setup request message to the DU #2 620. The F2 setup request message may include information for requesting delay measurement. For example, the F2 setup request message may include information for requesting delay measurement according to the second method. The second method indicates a delay measurement method using two-way signaling described through FIGS. 9A to 9B. For example, the F2 setup request message may be configured as shown in Table 12.

In operation 1063, the DU #2 620 may transmit an F2 setup response message to the DU #1 610. The F2 setup response message may include trigger information, in response to the F2 setup request message including the "Delay Measurement Request" IE. The trigger information may be used to respond to the measurement request of the DU #1 610. In a case that the DU #2 620 receives, from another DU (e.g., the DU #1 610), an F2 setup request message including a measurement request before transmitting the F2 setup request message, the DU #2 620 may determine whether to accept the measurement request. For example, in a case that the DU #2 620 does not accept the measurement request, the DU #2 620 may transmit, to the DU #1, an F2 setup response message including trigger information requesting a trigger to the DU #1 610.

In operation 1065, the DU #2 620 may wait for an F2 measurement request message. The DU #1 610 may determine to initiate an F2 measurement procedure based on the F2 setup response message. For example, the DU #1 610 may determine to initiate the F2 measurement procedure by transmitting the F2 measurement request message based on the trigger information. The DU #2 620 may wait for the F2 measurement request message to be transmitted from the DU #1 610 based on the F2 setup response message.

In operation 1071, the DU #1 610 may transmit an F2 measurement request message to the DU #2 620. The descriptions of FIGS. 9A to 9B may be referenced for the F2 measurement request message. For example, the F2 measurement request message may include the first system time (e.g., T1), which is time information at which the F2 measurement request message is transmitted from the DU #1 610.

In operation 1073, the DU #2 620 may transmit an F2 measurement response message to the DU #1 610. The descriptions of FIGS. 9A to 9B may be referenced for the F2 measurement response message. For example, the F2 measurement response message may include the second system time (e.g., T2), which is time information at which the F2 measurement request message is received at the DU #2 620, and the third system time (e.g., T3), which is time information at which the F2 measurement response message is transmitted from the DU #2 620. For another example, the F2 measurement response message may include information on a difference between the second system time (e.g., T2), which is time information at which the F2 measurement request message is received at the DU #2 620, and the third system time (e.g., T3), which is time information at which the F2 measurement response message is transmitted from the DU #2 620.

In operation 1075, the DU #1 610 may perform a delay condition analysis. The DU #1 610 may measure a link delay based on a time (e.g., T1) at which the F2 measurement request message is transmitted from the DU #1 610, a time (e.g., T4) at which the F2 measurement response message is received, and information (e.g., T2, T3, T3-T2) included in the F2 measurement response message. The DU #1 610 may perform the delay condition analysis based on a value measured as the link delay. For example, the DU #1 610 may identify whether the link delay is equal to or greater than a delay threshold. In a case that the link delay is equal to or greater than the delay threshold, the DU #1 610 may no longer perform the measurement procedure. The DU #1 610 may perform an F2 removal procedure to release the F2 connection. In a case that the link delay is less than the delay threshold, the DU #1 610 may perform operation 1077 described below.

In operation 1077, the DU #1 610 may transmit an F2 measurement complete message to the DU #2 620. The descriptions of FIGS. 9A to 9B may be referenced for the F2 measurement complete message. For example, the F2 measurement complete message may include a fourth system time (e.g., T4), which is time information at which the F2 measurement response message is received at the DU #1 610, and a fifth system time (e.g., T5), which is time information at which the F2 measurement complete message is transmitted from the DU #1 610. For another example, the F2 measurement response message may include information on a difference between the fourth system time (e.g., T4), which is time information at which the F2 measurement response message is received at the DU #1 610, and the fifth system time (e.g., T5), which is time information at which the F2 measurement complete message is transmitted from the DU #1 610.

In operation 1079, the DU #2 620 may perform a delay condition analysis. The DU #2 620 may measure a link delay based on a time (e.g., T3) at which the F2 measurement response message is transmitted from the DU #2 620, a time (e.g., T6) at which the F2 measurement complete message is received, and information (e.g., T4, T5, T5-T4) included in the F2 measurement response message. The DU #2 620 may perform the delay condition analysis based on a value measured as the link delay. For example, the DU #2 620 may identify whether the link delay is equal to or greater than a delay threshold. In a case that the link delay is equal to or greater than the delay threshold, the DU #2 620 may no longer perform the measurement procedure. The DU #2 620 may perform an F2 removal procedure to release the F2 connection. In a case that the link delay is less than the delay threshold, the DU #2 620 may continuously perform communication with the DU #1 610 through the F2 interface.

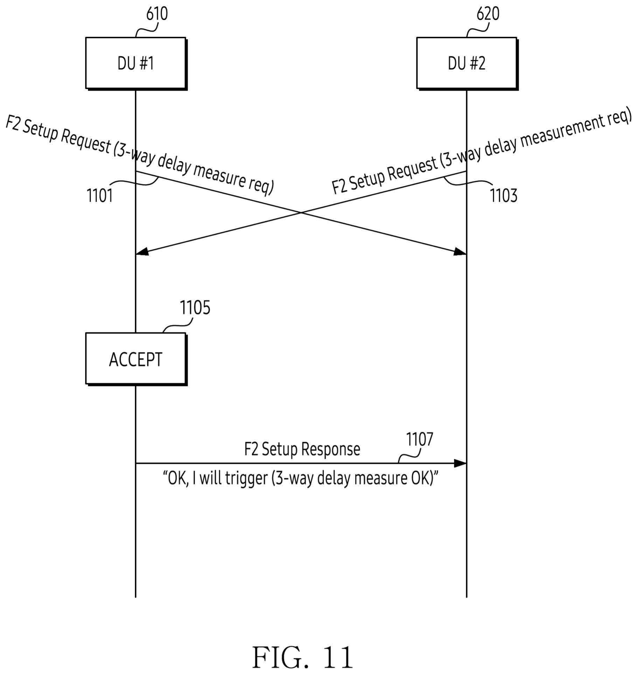

FIG. 11 is a diagram illustrating signaling for delay measurement. In FIG. 11, a situation in which an F2 setup procedure is initiated at each of the DUs is described. The DUs (e.g., the DU #1 610 and the DU #2 620) may include DUs (e.g., the DU #1 210-1, the DU #2 210-2, the DU #1 231, and the DU #2 232) described in FIGS. 2A to 2C and supporting a protocol of an RLC layer and a protocol of a MAC layer. For example, the DUs may include the O-DU 430 described in FIGS. 4A to 4B.

Referring to FIG. 11, in operation 1101, the DU #1 610 may transmit an F2 setup request message to the DU #2 620. The F2 setup request message may include information for requesting delay measurement. For example, the F2 setup request message may include information for requesting delay measurement according to the second method. The second method indicates a delay measurement method using two-way signaling as described with reference to FIGS. 9A to 9B. For example, the F2 setup request message may be configured as shown in Table 12.

In operation 1103, the DU #2 620 may transmit an F2 setup request message to the DU #1 610. The F2 setup request message may include information for requesting delay measurement. For example, the F2 setup request message may include information for requesting delay measurement according to the second method. The second method indicates a delay measurement method using two-way signaling as described with reference to FIGS. 9A to 9B. For example, the F2 setup request message may be configured as shown in Table 12.

In operation 1105, the DU #1 610 may determine whether to accept the F2 setup request message of the DU #2 620. The DU #1 610 may wait for an F2 setup response message from the DU #2 620. However, if the DU #1 610 receives the F2 setup request message of the DU #2 620 while waiting for the F2 setup response message from the DU #2 620, the DU #1 610 may be configured to determine to accept the F2 setup request message of the DU #2 620. This is because the procedure may be delayed if both sides are waiting.

In operation 1107, the DU #1 610 may transmit an F2 measurement response message to the DU #2 620. The F2 measurement response message may include information indicating that measurement of a link delay is to be initiated in the DU #1 610. For example, the F2 measurement response message may include the '3-way Delay Measure OK'IE. Meanwhile, the DU #2 620 may also attempt to transmit the F2 measurement response message in the same method as the DU #1 610. Herein, in a case that the DU #2 620 receives the F2 measurement response message from the DU #1 610 before transmitting the F2 measurement response message for the operation 1101, the DU #2 620 may determine not to transmit the F2 measurement response message for the operation 1101.

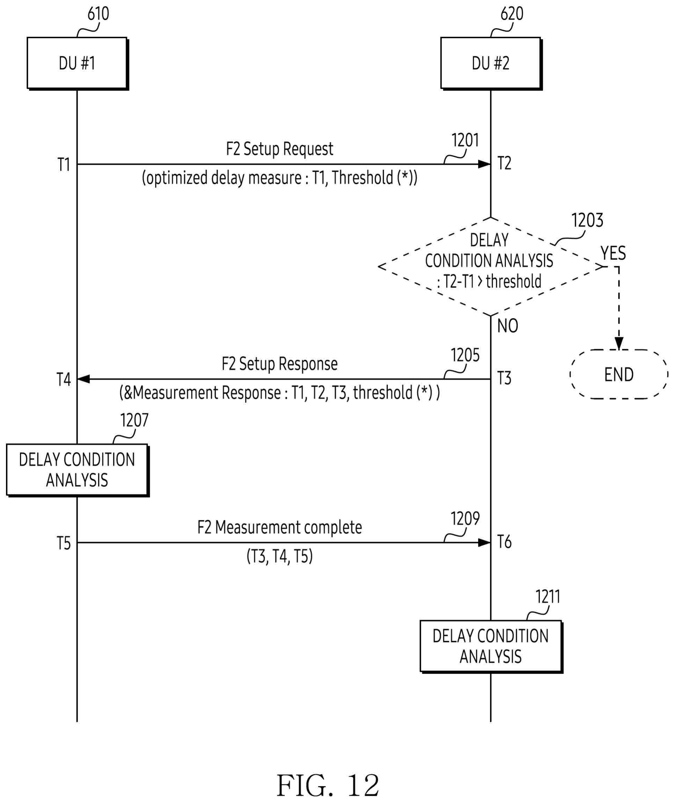

FIG. 12 is a diagram illustrating signaling for delay measurement. The DUs (e.g., the DU #1 610 and the DU #2 620) may include DUs (e.g., the DU #1 210-1, the DU #2 210-2, the DU #1 231, and the DU #2 232) described in FIGS. 2A to 2C and supporting a protocol of an RLC layer and a protocol of a MAC layer. For example, the DUs may include the O-DU 430 described in FIGS. 4A to 4B.

Referring to FIG. 12, an example in which an F2 setup request message and an F2 setup response message of an F2 setup procedure are used for measurement of link delay is described. The F2 setup request message may include at least a portion of parameters of the F2 measurement request message described in FIGS. 9A to 9B. The F2 setup response message may include at least a portion of parameters of the F2 measurement response message described in FIGS. 9A to 9B.

In operation 1201, the DU #1 610 may transmit an F2 setup request message to the DU #2 620. According to an embodiment, the F2 setup request message may include first system time (e.g., T1), which is time information at which the F2 setup request message is transmitted from the DU #1 610. Also, additionally, the F2 setup request message may include information for indicating a delay threshold (hereinafter, a first delay threshold). For example, the F2 setup request message may have the following format.

[Table 13]

| IE/Group Name | Presence | Range | IE type and reference | Semantics description | Criticality | Assigned Criticality |
|---|---|---|---|---|---|---|
| Message Type | | | | | | |
| Global gNB ID | M | | | | | |
| gNB-DU ID | MorO | | | | | |
| Delay Measurement Request | M or O | (3-way delay measurement required,..) | | | | |
| gNB System Time | MorO | | X.Time Stamp | (T1) | | |
| Delay threshold | MorO | | | Acceptable delay threshold for F2 link | | |

The 'Message Type' IE indicates a type of the F2 setup request message. The 'Global gNB ID' IE may include a global ID of a gNB. The 'gNB-DU ID' IE may be identification information for uniquely identifying the DU #1 610 in the gNB. The 'Delay Measurement Request' IE may indicate a request of a measurement procedure from the DU #1 610 to the DU #2 620. The 'gNB System Time' IE may indicate a time at which the DU #1 610 transmits the F2 setup request message to the DU #2 620. The 'Delay Threshold' IE may include a delay threshold indicating an acceptable upper limit value for enabling communication over the F2 interface. 'M' indicates a mandatory component for a message, and 'O' indicates an optional component for a message. 'M' and/or 'O' illustrated in the above- described table are exemplary and a specific description is not to be construed as limiting a specific embodiment of the present disclosure.

In operation 1203, the DU #2 620 may determine whether to accept the F2 setup request message of the DU #1 610. The DU #2 620 may obtain the first delay threshold based on the F2 setup request message. For example, the DU #2 620 may identify the first delay threshold from the F2 setup request message. The DU #2 620 may obtain information on a time at which the F2 setup request message is received. For example, the DU #2 620 may obtain second system time (e.g., T2). The DU #2 620 may determine whether to accept the F2 setup request message, based on a difference (e.g., Delta = T2 - T1) between the second system time (e.g., T2) and the first system time (e.g., T1). For example, the DU #2 620 may determine to accept the F2 setup request message in a case that the difference between the second system time and the first system time is equal to or greater than the first delay threshold. The DU #2 620 may determine to reject the F2 setup request message in a case that the difference between the second system time and the first system time is less than the first delay threshold.

In the above-described embodiment, whether to accept the F2 setup request message is determined based on the first delay threshold obtained through the operation 1201, but the embodiments of the present disclosure are not limited thereto. According to another embodiment, a determination regarding whether to accept the F2 setup request message may be determined based on an internal value stored in the DU #2 620. In this case, the first delay threshold may not be included in the F2 setup request message.

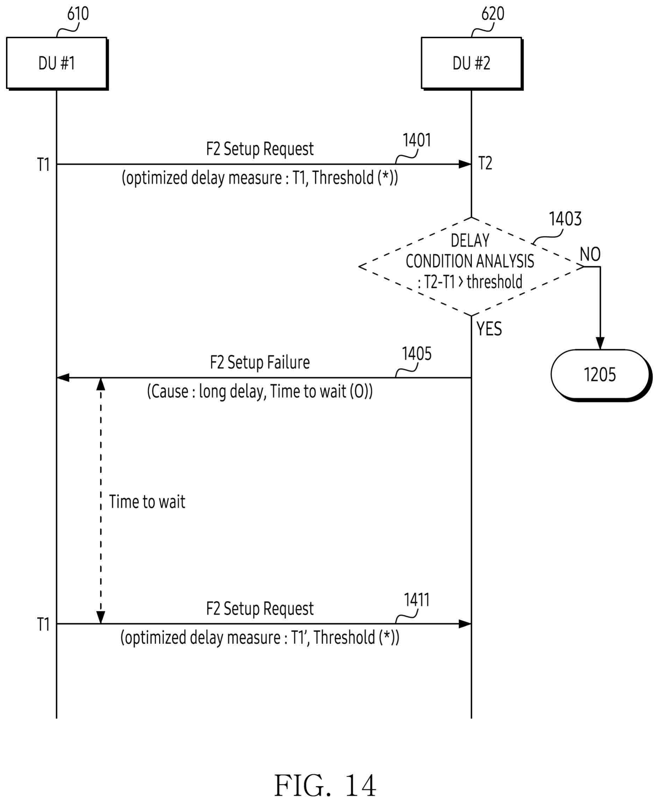

In a case that the DU #2 620 accepts the F2 setup request message of the DU #1 610, the DU #2 620 may perform operation 1205. In a case that the DU #2 620 does not accept the F2 setup request message of the DU #1 610, the DU #2 620 may determine to terminate a measurement procedure. For example, the DU #2 620 may transmit an F2 setup failure message to the DU #1 610. An example of the F2 setup failure message is described in FIG. 14. Meanwhile, although the operation 1203 is illustrated in FIG. 12, a delay determination in the operation 1203 is a procedure according to one-way measurement and may cause an inaccurate determination. According to another embodiment, the operation 1203 may be omitted. For example, in a case that the DU #2 620 is configured not to use one-way delay, the DU #2 620 may perform operation 1205 in response to the F2 setup request message.

In operation 1205, the DU #2 620 may transmit an F2 setup response message to the DU #1 610. The DU #2 620 may transmit the F2 setup response message so that the DU #1 610 may obtain a difference between a time at which the F2 setup request message is received and a time at which the F2 setup response message is transmitted. According to an embodiment, the F2 setup response message may include second system time (e.g., T2), which is time information at which the F2 setup request message is received at the DU #2 620, and third system time (e.g., T3), which is time information at which the F2 setup response message is transmitted from the DU #2 620. According to another embodiment, the F2 setup response message may include information on a difference between the second system time (e.g., T2) and the third system time (e.g., T3). According to still another embodiment, the F2 setup response message may transmit an F2 setup response message including identification information (e.g., gNB-DU ID, Global gNB ID) of the DU without information on a system time. Herein, the difference between the second system time (e.g., T2) and the third system time (e.g., T3) may be a predetermined value. In addition, the F2 setup response message may include information for indicating a delay threshold (hereinafter, a second delay threshold). For example, the F2 setup response message may have the following format.

[Table 14]

| IE/Group Name | Presence | Range | IE type and reference | Semantics description | Criticality | Assigned Criticality |
|---|---|---|---|---|---|---|
| Message Type | | | | | | |
| Global gNB ID | M | | | | | |
| gNB-DU ID | MorO | | | | | |
| Delay Measuremen t Request | M or O | (3-way delay measuremen t required,..) | | | | |
| gNB System Time | MorO | | X. Time Stamp | (T1) | | |
| gNB System Send Time | MorO | | X. Time Stamp | T3 | | |
| gNB System Received Time | MorO | | X. Time Stamp | T2 | | |

(continued)

| IE/Group Name | Presence | Range | IE type and reference | Semantics description | Criticality | Assigned Criticality |
|---|---|---|---|---|---|---|
| Target Global gNB ID | MorO | | | | | |
| Target gNB-DU ID | M or O | | | | | |
| Target gNB System Time | MorO | | X. Time Stamp | T1(If T1 is received before, it should be stored and returned to the target node) | | |
| Delay threshold | M or O | | | Acceptable delay threshold for F2 link | | |

The 'Message Type' IE indicates a type of the F2 measurement response message. The 'Message Type' IE may indicate a message code (e.g., one of values from 0 to 255 defined in 8 bits) and a message type. The message type may be one of 'initiation message', 'successful outcome', and 'unsuccessful outcome'. The 'Global gNB ID' IE may include a global ID of a gNB of the DU #2 620. The 'Global gNB ID' IE may be used to globally identify the gNB of the DU #2 620. Identification information indicated by the 'Global gNB ID' IE may consist of a PLMN ID and a gNB ID to which the gNB belongs. The 'gNB-DU ID' IE may be identification information for uniquely identifying the DU #2 620 in the gNB. The 'Target Global gNB ID' IE may include a global ID of a gNB of the DU #1 610. The 'Target gNB-DU ID' IE may be identification information for uniquely identifying the DU #1 610 in the gNB. The 'gNB System Send Time' IE may indicate a system value of time (e.g., T3) at which the F2 measurement response message is transmitted from the DU #2 620. The 'gNB System Received Time' IE may indicate a system value of time (e.g., T2) at which the F2 measurement request message is received at the DU #2 620. The 'Target gNB System Time' IE may indicate a system value of time (e.g., T1) at which the F2 measurement request message is transmitted from the DU #1 610. The system value may be obtained through information (e.g., the 'gNB System Time' IE) received in operation 601. The 'Delay Threshold' IE may include a delay threshold indicating an acceptable upper limit value for enabling communication over the F2 interface.

'M' indicates a mandatory component for a message, and 'O' indicates an optional component for a message. 'M' and/or 'O' illustrated in the above- described table are exemplary and a specific description is not to be construed as limiting a specific embodiment of the present disclosure.

In operation 1207, the DU #1 610 may perform a delay condition analysis. The DU #1 610 may measure a link delay based on a time (e.g., T1) at which the F2 setup request message is transmitted from the DU #1 610, a time (e.g., T4) at which the F2 setup response message is received, and information (e.g., T2, T3, T3 - T2) in the F2 setup response message. The DU #1 610 may perform the delay condition analysis based on a value measured as the link delay. For example, the DU #1 610 may identify whether the link delay is equal to or greater than a second delay threshold. If the link delay is equal to or greater than the second delay threshold, the DU #1 610 may no longer perform the measurement procedure. The DU #1 610 may perform an F2 removal procedure for releasing the F2 connection. If the link delay is less than the second delay threshold, the DU #1 610 may perform operation 1209 described below. Meanwhile, according to another embodiment, the second delay threshold may be preset.

In operation 1209, the DU #1 610 may transmit an F2 measurement complete message to the DU #2 620. The descriptions of FIGS. 9A to 9B may be referenced for the F2 measurement complete message. The DU #1 610 may transmit the F2 measurement complete message to the DU #2 620 so that the DU #2 620 may obtain a difference between a time at which the F2 setup response message is received and a time at which the F2 measurement complete message is transmitted. According to an embodiment, the F2 measurement complete message may include a fourth system time (e.g., T4), which is time information at which the F2 measurement response message is received at the DU #1 610, and a fifth system time (e.g., T5), which is time information at which the F2 measurement complete message is transmitted from the DU #1 610. According to another embodiment, the F2 measurement complete message may include information on a difference between the fourth system time (e.g., T4), which is time information at which the F2 measurement response message is received at the DU #1 610, and the fifth system time (e.g., T5), which is time information at which the F2 measurement complete message is transmitted. According to still another embodiment, the F2 measurement complete message may not include information on a system time. Herein, the difference between the fourth system time (e.g., T4) and the fifth system time (e.g., T5) may be a predetermined value.

In operation 1211, the DU #2 620 may perform a delay condition analysis. The DU #2 620 may measure a link delay based on a time (e.g., T3) at which the F2 measurement response message is transmitted from the DU #2 620, a time (e.g., T6) at which the F2 measurement complete message is received, and information (e.g., T4, T5, T5 - T4) in the F2 measurement response message. The DU #2 620 may perform the delay condition analysis based on a value measured as the link delay. For example, the DU #2 620 may identify whether the link delay is equal to or greater than a third delay threshold. If the link delay is equal to or greater than the third delay threshold, the DU #2 620 may no longer perform the measurement procedure. The DU #2 620 may perform an F2 removal procedure for releasing the F2 connection. If the link delay is less than the third delay threshold, the DU #2 620 may continuously perform communication with the DU #1 610 through the F2 interface. Meanwhile, according to another embodiment, the third delay threshold may be preset.

Since parameters (e.g., system time, threshold) required for the F2 measurement procedure are obtained in the F2 setup procedure through the procedure illustrated in FIG. 12, the F2 measurement request message and the F2 measurement response message of the F2 measurement procedure are not separately required, thereby simplifying the measurement procedure. By additionally performing only transmission of a message of a measurement completion procedure of the DU #1 610, a link delay according to a 3-way method may be obtained at each of the DU #1 610 and the DU #2 620.

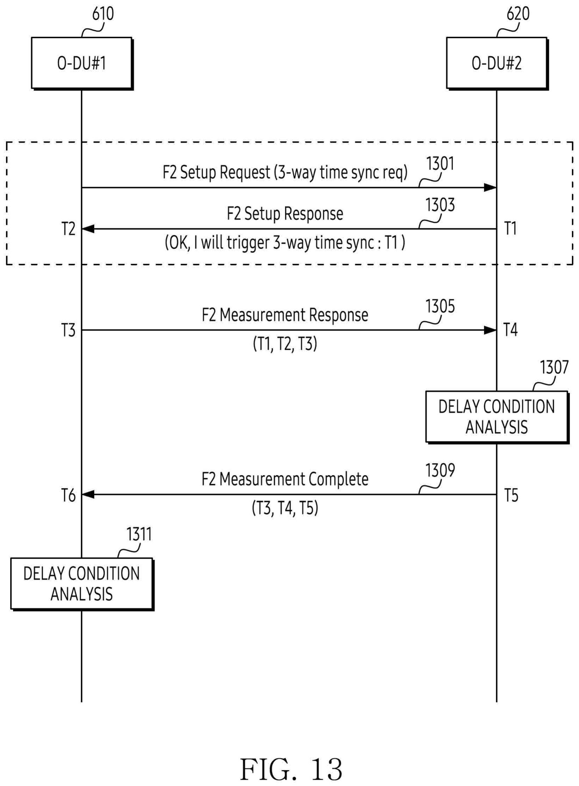

FIG. 13 is a diagram illustrating signaling for delay measurement. The DUs (e.g., the DU #1 610 and the DU #2 620) may include DUs (e.g., the DU #1 210-1, the DU #2 210-2, the DU #1 231, and the DU #2 232) described in FIGS. 2A to 2C and supporting a protocol of an RLC layer and a protocol of a MAC layer. For example, the DUs may include the O-DU 430 described in FIGS. 4A to 4B.

Referring to FIG. 13, in operation 1301, the DU #1 610 may transmit an F2 setup request message to the DU #2 620. The F2 setup request message may include information for requesting delay measurement. For example, the F2 setup request message may include information for requesting delay measurement according to the second method. The second method indicates a delay measurement method using two-way signaling described through FIGS. 9A to 9B. For example, the F2 setup request message may be configured as shown in the following table.

[Table 15]

| IE/Group Name | Presence | Range | IE type and reference | Semantics description | Criticality | Assigned Criticality |
|---|---|---|---|---|---|---|
| Message Type | M | | | | | |
| Global gNB ID | M | | | | | |
| gNB-DU ID | MorO | | | | | |
| Delay Measurement Request | M or O | (3-way delay measurement required,..) | | | | |
| Delay threshold | MorO | | | Acceptable delay threshold for F2 link | | |

The 'Message Type' IE indicates a type of the F2 setup request message. The 'Global gNB ID' IE may include a global ID of a gNB. The 'gNB-DU ID' IE may be identification information for uniquely identifying the DU #1 610 in the gNB. The 'Delay Measurement Request' IE may indicate a request of a measurement procedure from the DU #1 610 to the DU #2 620. The 'Delay Threshold' IE may include a delay threshold indicating an acceptable upper limit value for enabling communication over the F2 interface.

'M' indicates a mandatory component for a message, and 'O' indicates an optional component for a message. 'M' and/or 'O' illustrated in the above- described table are exemplary and a specific description is not to be construed as limiting a specific embodiment of the present disclosure.

In operation 1303, the DU #2 620 may transmit an F2 setup response message to the DU #1 610. The F2 setup response message may include trigger information in response to the F2 setup request message including the 'Delay Measurement Request' IE. The trigger information may be used to respond to a measurement request of the DU #1 610. According to an embodiment, the trigger information may indicate that a measurement procedure is initiated by the DU #2 620. For optimization of the procedure, the F2 setup response message may include at least a portion of parameters included in an F2 measurement request message of the measurement procedure. For example, the F2 measurement request message may include a first system time (e.g., T1), which is time information at which the F2 setup response message is transmitted from the DU #2 620.

In operation 1305, the DU #1 610 may transmit an F2 measurement response message to the DU #2 620. The descriptions of FIGS. 9A to 9B may be referenced for the F2 measurement response message. For example, the F2 measurement response message may include a second system time (e.g., T2), which is time information at which the F2 measurement request message is received at the DU #1 610, and a third system time (e.g., T3), which is time information at which the F2 measurement response message is transmitted from the DU #1 610. For another example, the F2 measurement response message may include information on a difference between the second system time (e.g., T2), which is time information at which the F2 measurement request message is received at the DU #1 610, and the third system time (e.g., T3), which is time information at which the F2 measurement response message is transmitted. In addition, the F2 measurement response message may further include information on the first system time (e.g., T1).

In operation 1307, the DU #2 620 may perform a delay condition analysis. The DU #2 620 may measure a link delay based on a time (e.g., T1) at which the F2 measurement request message is transmitted from the DU #2 620, a time (e.g., T4) at which the F2 measurement response message is received, and information (e.g., T2, T3, T3 - T2) in the F2 measurement response message. The DU #2 620 may perform the delay condition analysis based on a value measured as the link delay. For example, the DU #2 620 may identify whether the link delay is equal to or greater than a delay threshold. If the link delay is equal to or greater than the delay threshold, the DU #2 620 may no longer perform the measurement procedure. The DU #2 620 may perform an F2 removal procedure for releasing the F2 connection. If the link delay is less than the delay threshold, the DU #2 620 may perform operation 1309 described below.

In operation 1309, the DU #2 620 may transmit an F2 measurement complete message to the DU #1 610. The descriptions of FIGS. 9A to 9B may be referenced for the F2 measurement complete message. For example, the F2 measurement complete message may include a fourth system time (e.g., T4), which is time information at which the F2 measurement response message is received at the DU #2 620, and a fifth system time (e.g., T5), which is time information at which the F2 measurement complete message is transmitted from the DU #2 620. For another example, the F2 measurement complete message may include information on a difference between the fourth system time (e.g., T4), which is time information at which the F2 measurement response message is received at the DU #2 620, and the fifth system time (e.g., T5), which is time information at which the F2 measurement complete message is transmitted.

In operation 1311, the DU #1 610 may perform a delay condition analysis. The DU #1 610 may perform the delay condition analysis. The DU #1 610 may measure a link delay based on a time (e.g., T3) at which the F2 measurement response message is transmitted from the DU #1 610, a time (e.g., T6) at which the F2 measurement complete message is received, and information (e.g., T4, T5, T5 - T4) in the F2 measurement response message. The DU #1 610 may perform the delay condition analysis based on a value measured as the link delay. For example, the DU #1 610 may identify whether the link delay is equal to or greater than a delay threshold. If the link delay is equal to or greater than the delay threshold, the DU #1 610 may no longer perform the measurement procedure. The DU #1 610 may perform an F2 removal procedure for releasing the F2 connection. If the link delay is less than the delay threshold, the DU #1 610 may continuously perform communication with the DU #2 620 through the F2 interface.

FIG. 14 illustrates an example of delay measurement using a setup procedure in an interface between DUs. In FIG. 14, a situation in which a measurement procedure is terminated due to a long link delay during a setup procedure is described. The DUs (e.g., the DU #1 610 and the DU #2 620) may include DUs (e.g., the DU #1 210-1, the DU #2 210-2, the DU #1 231, and the DU #2 232) described in FIGS. 2A to 2C and supporting a protocol of an RLC layer and a protocol of a MAC layer. For example, the DUs may include the O-DU 430 described in FIGS. 4A to 4B.

Referring to FIG. 14, in operation 1401, the DU #1 610 may transmit an F2 setup request message to the DU #2 620. According to an embodiment, the F2 setup request message may include a first system time (e.g., T1), which is time information at which the F2 setup request message is transmitted from the DU #1 610. Also, additionally, the F2 setup request message may include information for indicating a delay threshold (hereinafter, a first delay threshold).

In operation 1403, the DU #2 620 may determine whether to accept the F2 setup request message of the DU #1 610. The DU #2 620 may obtain the first delay threshold based on the F2 setup request message. For example, the DU #2 620 may identify the first delay threshold from the F2 setup request message. The DU #2 620 may obtain information on a time at which the F2 setup request message is received. For example, the DU #2 620 may obtain a second system time (e.g., T2). The DU #2 620 may determine whether to accept the F2 setup request message, based on a difference (e.g., Delta = T2 - T1) between the second system time (e.g., T2) and the first system time (e.g., T1). For example, the DU #2 620 may determine to accept the F2 setup request message in a case that the difference between the second system time and the first system time is equal to or greater than the first delay threshold. The DU #2 620 may determine to reject the F2 setup request message in a case that the difference between the second system time and the first system time is less than the first delay threshold.

In the above-described embodiment, whether to accept the F2 setup request message is determined based on the first delay threshold obtained through the operation 1201, but the embodiments of the present disclosure are not limited thereto. According to another embodiment, a determination regarding whether to accept the F2 setup request message may be determined based on an internal value stored in the DU #2 620. In this case, the first delay threshold may not be included in the F2 setup request message.

In a case that the DU #2 620 does not accept the F2 setup request message of the DU #1 610, the DU #2 620 may determine to terminate a measurement procedure. To terminate the measurement procedure, the DU #2 620 may perform operation 1405.

In operation 1405, the DU #2 620 may transmit an F2 setup failure message to the DU #1 610. The F2 setup failure message may include cause information and/or waiting time information. As an example, the following format may be referenced for the F2 setup failure message.

[Table 16]

| IE/Group Name | Presence | Range | IE type and reference | Semantics description | Criticality | Assigned Criticality |
|---|---|---|---|---|---|---|
| Message Type | M | | | | | |
| Transaction ID | M | | | | | |
| Cause | M or O | | **Y. Cause** | (long delay, ...) | | |
| Time to Wait | M or O | | | | | |
| Criticality Diagnostics | M or O | | | | | |

The 'Message Type' IE indicates a type of the F2 removal response message. The 'Message Type' IE may indicate a message code (e.g., one of values from 0 to 255 defined in 8 bits) and a message type. The 'Transaction ID' may indicate an ID for distinguishing a transaction of the F2 setup failure message. The 'Cause' IE may indicate a cause of failure for the F2 setup request. The 'Time to Wait' IE may indicate a waiting time until initiation of a next setup procedure (e.g., transmission of the F2 setup request message) after the F2 setup failure. The 'Criticality Diagnostics' IE may be transmitted in a case that a part of a received message is not comprehended or is missed, or a logical error is included in the message. The 'Criticality Diagnostics' IE may include information on an IE that is not comprehended or missed. Although not shown in Table 16, the F2 setup failure message may further include the 'Global gNB ID' IE and/or the 'gNB-DU ID'. 'M' indicates a mandatory component for a message, and 'O' indicates an optional component for a message. 'M' and/or 'O' illustrated in the above- described table are exemplary and a specific description is not to be construed as limiting a specific embodiment of the present disclosure.

According to an embodiment, the F2 setup failure message may include cause information. The cause information may indicate information on a reason why the F2 setup has failed. For example, the cause information may indicate 'long delay'. As an example, the following format may be referenced for the cause information.

[Table 17]

| IE/Group Name | Presence | Range | IE type and reference | Semantics description |
|---|---|---|---|---|
| CHOICE Cause Group | M | | | |
| > Radio Network Layer | | | | |
| » Radio Network Layer Cause | M | | ENUMERATED(Unspecified, ...lots of per UE-level inter-DU call processing error causes, ..., TBD (F2 inter-DU CA functional error causes) | |
| > Transport Layer | | | | |
| » Transport Layer Cause | M | | ENUMERATED(Unspecified, Transport Resource Unavailable, ... Long (Backhaul) Delay, ...) | |
| > Protocol | | | | |
| >> Protocol Cause | M | | ENUMERATED(Transfer Syntax Error, Abstract Syntax Error (Reject), Abstract Syntax Error (Ignore and Notify), Message not Compatible with Receiver State, Semantic Error, Abstract Syntax Error (Falsely Constructed Message, Unspecified, ...) | |
| > Misc | | | | |

(continued)

| IE/Group Name | Presence | Range | IE type and reference | Semantics description |
|---|---|---|---|---|
| >> Miscella-neous Cause | M | | ENUMERATED(Control Processing Overload, Not enough User Plane Processing Resources, Hardware Failure, O&M Intervention, Unspecified, ...) | |

'M' indicates a mandatory component for a message, and 'O' indicates an optional component for a message. 'M' and/or 'O' illustrated in the above- described table are exemplary and a specific description is not to be construed as limiting a specific embodiment of the present disclosure. According to an embodiment, the F2 setup failure message may include waiting time information. The waiting time information may indicate a waiting time until initiation of a next setup procedure after the setup procedure is terminated. The setup procedure may not be initiated before the waiting time elapses. In other words, before the waiting time expires after receiving the F2 setup failure message, the DU #1 610 may not transmit an F2 setup request message.

In operation 1407, the DU #1 610 may transmit an F2 setup request message to the DU #2 620. The DU #1 610 may transmit the F2 setup request message to the DU #2 620 after the waiting time elapses from a time at which the F2 setup failure message is received from the DU #2 620. The F2 setup request message may be independent of the F2 setup request message of the operation 1401. For example, the F2 setup request message may include a seventh system time (e.g., T1'), which is time information at which the F2 setup request message is transmitted from the DU #1 610. Also, additionally, the F2 setup request message may include information for indicating a delay threshold. The delay threshold may be distinguished from the delay threshold of the F2 setup request message of the operation 1401.

In FIG. 14, a situation in which the measurement procedure is terminated because the link delay exceeds the delay threshold during the F2 setup procedure is described, but the embodiments of the present disclosure are not limited thereto. In a case that the DU #2 620 identifies that the link delay between the DU #1 610 and the DU #2 620 is equal to or greater than a set threshold, the DU #2 620 may terminate a procedure regardless of an ongoing procedure. According to an embodiment, the DU #2 620 may notify the DU #1 610 of termination of the measurement procedure by including the cause information and/or the waiting time information in the F2 setup request message.

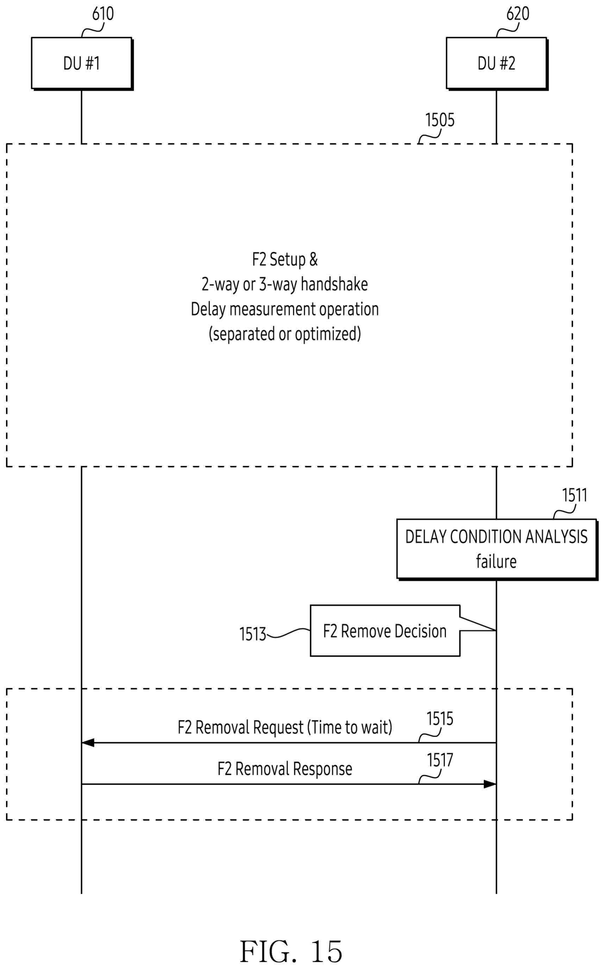

FIG. 15 illustrates an example of a removal procedure in an interface between DUs. The DUs (e.g., the DU #1 610 and the DU #2 620) may include DUs (e.g., the DU #1 210-1, the DU #2 210-2, the DU #1 231, and the DU #2 232) described in FIGS. 2A to 2C and supporting a protocol of an RLC layer and a protocol of a MAC layer. For example, the DUs may include the O-DU 430 described in FIGS. 4A to 4B.

Referring to FIG. 15, in operation 1505, delay measurement may be performed through a delay measurement procedure between the DU #1 610 and the DU #2 620 (e.g., delay measurement according to the first method of FIGS. 6 to 8C and delay measurement according to the second method of FIGS. 9A to 13).

In operation 1511, the DU #2 620 may perform a delay condition analysis. The DU #2 620 may obtain a link delay between the DU #1 610 and the DU #2 620. The DU #2 620 may identify whether the link delay is equal to or greater than a delay threshold. If the link delay is equal to or greater than the delay threshold, the DU #2 620 may no longer perform the measurement procedure. The DU #2 620 may perform operation 1513 to release the F2 connection.

In operation 1513, the DU #2 620 may determine to initiate an F2 removal procedure.

In operation 1515, the DU #2 620 may transmit an F2 removal request message to the DU #1 610. The DU #1 610 may initiate a procedure by sending an F2 removal request message to the DU #2 620. Upon receiving the F2 removal request message, the DU #2 620 may determine to remove all resources related to a signaling connection. According to an embodiment, the DU #1 610 may transmit identification information (e.g., gNB identification information, CU identification information, DU identification information) of the DU #1 610 to the DU #2 620. According to an embodiment, the DU #1 610 may transmit cause information to the DU #2 620. For example, the F2 removal request message may have a format of Table 5.

In operation 1517, the DU #1 610 may transmit an F2 removal response message to the DU #2 620. For example, the F2 removal response message may have a format of Table 6.

In FIG. 15, a release of connection through the F2 removal procedure is described, but the embodiments of the present disclosure are not limited thereto. The DU #1 610 may release an F2 interface connection by releasing an SCTP connection. In this case, an F2 setup request message of the DU #2 620 may be transmitted, but the DU #1 610 may be disconnected due to non-response.

In the above-described drawings and tables, a gNB and a DU (e.g., gNB-DU) of the gNB are described as examples, but the embodiments of the present disclosure are not limited thereto. For example, the DU may be a network entity of an eNB. In the above-described messages (e.g., F2 setup request message, F2 setup response message, F2 measurement request message, F2 measurement response message, F2 removal request message, and F2 removal response message), a global eNB ID and/or an eNB-DU ID may also be used to identify the DU.

In the present disclosure, messages including information on a system time are described for measuring a delay of an interface between DUs. In the above-described tables, 'X. Time Stamp', which is a 'Time Stamp' IE defined in section X, indicates a type indicating a system time. The system time may be represented in one of various methods.

According to an embodiment, a system time of the 'Time Stamp' IE may be represented as a time stamp based on the following table. A time stamp (e.g., TS 38.473 9.3.1.171) available in F1 application protocol (F1AP) may be used for the F2 interface.

[Table 18]

| IE/Group Name | Presence | Range | IE Type and Reference | Semantics Description | Criticality | Assigned Criticality |
|---|---|---|---|---|---|---|
| System Frame Number | M | | INTEGER(0..102 3) | | - | |
| CHOI CE *Slot Index* | M | | | | - | |
| >*SCS-15* | | | | | | |
| >>SCS -15 | M | | INTEGER(0..9) | | - | |
| >*SCS-30* | | | | | | |
| >>SCS -30 | M | | INTEGER(0..19) | | - | |
| >*SCS-60* | | | | | | |
| >>SCS -60 | M | | INTEGER(0..39) | | - | |
| >*SCS-120* | | | | | | |
| >>SCS -120 | M | | INTEGER(0..79) | | - | |
| >*SCS-480* | | | | | | |
| >>SCS -480 | M | | INTEGER(0..319 ) | | YES | reject |
| >*SCS-960* | | | | | - | |
| >>SCS -960 | M | | INTEGER(0..639 ) | | YES | reject |
| Measur ement Time | O | | Relative Time 19009.3.1.183 | | - | |

The 'System Frame Number' IE indicates an SFN having one of 1024 values. The 'Slot Index' may indicate a slot number according to numerology. As subcarrier spacing (SCS) increases, the number of slots in the SFN may increase.

As the SCS increases, a range of slot numbers may increase. The 'Measurement Time' IE indicates a measured time, and a corresponding format indicates initialization time (e.g., system frame number (SFN) initialization time of a cell, requested time for action, and the like). For the 'Measurement Time' IE, a format of the following table may be referenced.

[Table 19]

| IE/Group Name | Presence | Range | IE Type and Reference | Semantics Description |
|---|---|---|---|---|
| Relative Time 1900 | M | | BIT STRING (SIZE(64)) | Time in seconds relative to 00:00:00 on 1 January 1900 (calculated as continuous time without leap seconds and traceable to a common time reference) where binary encoding of the integer part is in the first 32 bits and binary encoding of the fraction part in the last 32 bits. The fraction part is expressed with a granularity of 1 /2**32 second |

According to an embodiment, an arrangement and inclusion relationship of IEs may be changed to indicate a system time of the 'Time Stamp' IE. For example, Table 18 may be changed as shown in the following table.

[Table 20]

| IE/Group Name | Presence | Range | IE Type and Reference | Semantics Description | Criticality | Assigned Criticality |
|---|---|---|---|---|---|---|
| Measurement Time | M | | Relative Time 19009.3.1.183 | | - | |
| System Frame Number | O | | INTEGER(0..102 3) | | - | |
| CHOI CE *Slot Index* | O | | | | - | |
| >*SCS*-15 | | | | | | |
| >>SC S-15 | M | | INTEGER(0..9) | | - | |
| >*SCS-30* | | | | | | |
| >>SC S-30 | M | | INTEGER(0..19) | | - | |
| >*SCS-60* | | | | | | |
| >>SC S-60 | M | | INTEGER(0..39) | | - | |
| >*SCS-120* | | | | | | |
| >>SC S-120 | M | | INTEGER(0..79) | | - | |
| >*SCS-480* | | | | | | |
| >>SC S-480 | M | | INTEGER(0..319 ) | | YES | reject |
| >*SCS-960* | | | | | - | |
| >>SC S-960 | M | | INTEGER(0..639 ) | | YES | reject |

According to an embodiment, a system time of the 'Time Stamp' IE may be represented as a time stamp based on the following table. A time stamp (e.g., TS 38.415) available for protocol data unit (PDU) session control may be used for the F2 interface.

[Table 21]

| IE/Group Name | Presence | Range | IE Type and Reference | Semantics Description |
|---|---|---|---|---|
| Time Stamp | M | | BIT STRING (SIZE(64)) | This field indicates the timestamp which is encoded in the same format as the 64-bit timestamp format as defined in Section 6 of IETF RFC 5905 [6]. |

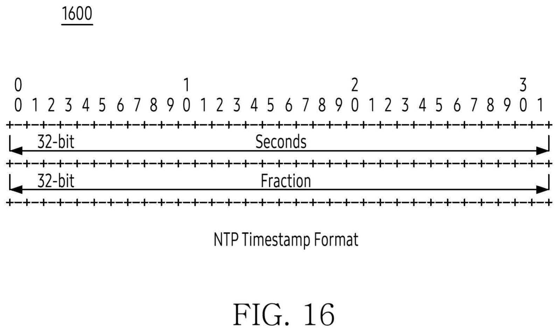

In Section 6 of 'RFC 5905', a time may be represented in seconds and fractions by 32 bits, respectively. For example, the time may be represented as a network time protocol (NTP) time stamp format 1600 of FIG. 16. A range of 'Time Stamp' values may be from 0 to $2^{64}$ - 1.

According to embodiments of the present disclosure, a method performed by a first distributed unit (DU) is provided. The method may comprise transmitting, to a second DU, a measurement request message through a communication interface between the first DU and the second DU. The method may comprise receiving, from the second DU, a measurement response message through the communication interface. The measurement request message may include a global identification (ID) of a base station of the first DU, first identification information of the first DU in the base station, and first time information for indicating a first system time at which the measurement request message is transmitted from the first DU. The measurement response message may include a global ID of a base station of the second DU, second identification information of the second DU in the base station, and second time information. The second time information may be used to identify a difference between a second system time at which the measurement request message is received at the second DU and a third system time at which the measurement response message is transmitted from the second DU.

According to an exemplary embodiment, the second time information may include information on the second system time and information on the third system time.

According to an exemplary embodiment, the second time information may include first difference information for indicating a difference between the second system time and the third system time.

According to an exemplary embodiment, the method may further comprise obtaining a link delay between the first DU and the second DU based on the first system time, the second system time, the third system time, and a fourth system time. The fourth system time may indicate a time at which the measurement response message is received at the first DU.

According to an exemplary embodiment, the link delay may be determined by dividing a difference between a first difference value and a second difference value by two. The first difference value may indicate a time interval from the first system time to the fourth system time. The second difference value may indicate a time interval from the second system time to the third system time.

According to an exemplary embodiment, the measurement request message may further include information on a delay threshold. In a case that the link delay between the first DU and the second DU is equal to or greater than the delay threshold, a release of connection between the first DU and the second DU may be triggered.

According to an exemplary embodiment, the method may further comprise transmitting, to the second DU through the communication interface, a measurement complete message. The measurement complete message may include the global ID of the base station of the first DU, the first identification information of the first DU in the base station, and third time information. The third time information may be used to identify a difference between a fourth system time at which the measurement response message is received at the first DU and a fifth system time at which the measurement complete message is transmitted from the first DU.

According to an exemplary embodiment, the method may comprise transmitting, to the second DU through the interface, a removal request message for releasing a connection between the first DU and the second DU. The method may comprise receiving, from the second DU through the interface, a removal response message. The removal request message may include information on a designated waiting time. The first DU may be configured not to initiate a setup procedure during the designated waiting time after the connection between the first DU and the second DU is released. For example, the removal request message may further include cause information. The cause information may indicate that a link delay over the communication interface is equal to or greater than a designated delay threshold.

According to an exemplary embodiment, the method may comprise transmitting, to the second DU through the interface, a setup request message. The method may further comprise receiving, from the second DU through the interface, a setup response message. The setup request message may include information for indicating a request for delay measurement over the interface between the first DU and the second DU. The setup response message may include information for indicating whether to accept or reject the request for delay measurement.

According to embodiments of the present disclosure, an electronic device for a first distributed unit (DU) is provided. The electronic device may comprise memory storing one or more instructions. When executed, the one or more instructions may cause the first DU to transmit, to a second DU through a communication interface between the first DU and the second DU, a measurement request message. When executed, the one or more instructions may cause the first DU to receive, from the second DU through the communication interface, a measurement response message. The measurement request message may include a global ID of a base station of the first DU, first identification information of the first DU in the base station, and first time information for indicating a first system time at which the measurement request message is transmitted from the first DU. The measurement response message may include a global ID of a base station of the second DU, second identification information of the second DU in the base station, and second time information. The second time information may be used to identify a difference between a second system time at which the measurement request message is received at the second DU and a third system time at which the measurement response message is transmitted from the second DU.

According to an exemplary embodiment, the second time information may include information on the second system time and information on the third system time.

According to an exemplary embodiment, the second time information may include first difference information for indicating a difference between the second system time and the third system time.

According to an exemplary embodiment, when executed, the one or more instructions may cause the first DU to obtain a link delay between the first DU and the second DU based on the first system time, the second system time, the third system time, and a fourth system time. The fourth system time may indicate a time at which the measurement response message is received at the first DU.

According to an exemplary embodiment, the link delay may be determined by dividing a difference between a first difference value and a second difference value by two. The first difference value may indicate a time interval from the first system time to the fourth system time. The second difference value may indicate a time interval from the second system time to the third system time.

According to an exemplary embodiment, the measurement request message may further include information on a delay threshold. In a case that the link delay between the first DU and the second DU is equal to or greater than the delay threshold, a release of connection between the first DU and the second DU may be triggered.

According to an exemplary embodiment, when executed, the one or more instructions may cause the first DU to transmit, to the second DU through the communication interface, a measurement complete message. The measurement complete message may include the global ID of the base station of the first DU, the first identification information of the first DU in the base station, and third time information. The third time information may be used to identify a difference between a fourth system time at which the measurement response message is received at the first DU and a fifth system time at which the measurement complete message is transmitted from the first DU.

According to an exemplary embodiment, when executed, the one or more instructions may cause the first DU to transmit, to the second DU through the interface, a removal request message for releasing a connection between the first DU and the second DU. When executed, the one or more instructions may cause the first DU to receive, from the second DU through the interface, a removal response message. The removal request message may indicate information on a designated waiting time. The first DU may be configured not to initiate a setup procedure during the designated waiting time after the connection between the first DU and the second DU is released.

According to an exemplary embodiment, the removal request message may further includes cause information. The cause information may indicate that a link delay over the communication interface is equal to or greater than a designated delay threshold.

According to an exemplary embodiment, when executed, the one or more instructions may cause the first DU to transmit, to the second DU through the interface, a setup request message, and receive, from the second DU through the interface, a setup response message. The setup request message may include information for indicating a request for delay measurement over the interface between the first DU and the second DU. The setup response message may include information for indicating whether to accept or reject the request for delay measurement.

According to embodiments of the present disclosure, an electronic device of a first distributed unit (DU) is provided. The electronic device may comprise at least one transceiver, at least one processor, and memory. The at least one processor may be operably coupled with the memory and the at least one transceiver. The at least one processor may be configured to transmit, to a second DU, a measurement request message through a communication interface between the first DU and the second DU. The at least one processor may be configured to receive, from the second DU, a measurement response message through the communication interface. The measurement request message may include a global identification (ID) of a base station of the first DU, first identification information of the first DU in the base station, and first time information for indicating a first system time at which the measurement request message is transmitted from the first DU. The measurement response message may include a global ID of a base station of the second DU, second identification information of the second DU in the base station, and second time information. The second time information may be used to identify a difference between a second system time at which the measurement request message is received at the second DU and a third system time at which the measurement response message is transmitted from the second DU.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1.   A method performed by a first distributed unit (DU), the method comprising:

   transmitting, to a second DU, a measurement request message through a communication interface between the first DU and the second DU; and
   receiving, from the second DU, a measurement response message through the communication interface;
   wherein the measurement request message includes a global identification (ID) of a base station of the first DU, first identification information of the first DU in the base station, and first time information for indicating a first system time at which the measurement request message is transmitted from the first DU,
   wherein the measurement response message includes a global ID of a base station of the second DU, second identification information of the second DU in the base station, and second time information, and
   wherein the second time information is used to identify a difference between a second system time at which the measurement request message is received at the second DU and a third system time at which the measurement response message is transmitted from the second DU.

2.   The method of claim 1,
   wherein the second time information includes information on the second system time and information on the third system time.

3.   The method of claim 1,
   wherein the second time information includes first difference information for indicating a difference between the second system time and the third system time.

4.   The method of claim 1, further comprising:

   obtaining a link delay between the first DU and the second DU based on the first system time, the second system time, the third system time, and a fourth system time,
   wherein the fourth system time indicates a time at which the measurement response message is received at the first DU.

5.   The method of claim 4,

   wherein the link delay is determined by dividing a difference between a first difference value and a second difference value by two,
   wherein the first difference value indicates a time interval from the first system time to the fourth system time, and
   wherein the second difference value indicates a time interval from the second system time to the third system time.

6.   The method of claim 4,

   wherein the measurement request message further includes information on a delay threshold, and
   wherein, in a case that the link delay between the first DU and the second DU is equal to or greater than the delay threshold, a release of connection between the first DU and the second DU is triggered.

7. The method of claim 1, further comprising:

transmitting, to the second DU through the communication interface, a measurement complete message, wherein the measurement complete message includes the global ID of the base station of the first DU, the first identification information of the first DU in the base station, and third time information, and wherein the third time information is used to identify a difference between a fourth system time at which the measurement response message is received at the first DU and a fifth system time at which the measurement complete message is transmitted from the first DU.

8. The method of claim 1, further comprising:

transmitting, to the second DU through the interface, a removal request message for releasing a connection between the first DU and the second DU, receiving, from the second DU through the interface, a removal response message, wherein the removal request message includes information on a designated waiting time, and wherein the first DU is configured not to initiate a setup procedure during the designated waiting time after the connection between the first DU and the second DU is released.

9. The method of claim 8,

wherein the removal request message further includes cause information, and wherein the cause information indicates that a link delay over the communication interface is equal to or greater than a designated delay threshold.

10. The method of claim 1, further comprising:

transmitting, to the second DU through the interface, a setup request message, receiving, from the second DU through the interface, a setup response message, wherein the setup request message includes information for indicating a request for delay measurement over the interface between the first DU and the second DU, and wherein the setup response message includes information for indicating whether to accept or reject the request for delay measurement.

11. An electronic device for a first distributed unit (DU), comprising:

memory storing one or more instructions, wherein, when executed, the one or more instructions cause the first DU to transmit, to a second DU through a communication interface between the first DU and the second DU, a measurement request message, and receive, from the second DU through the communication interface, a measurement response message, wherein the measurement request message includes a global ID of a base station of the first DU, first identification information of the first DU in the base station, and first time information for indicating a first system time at which the measurement request message is transmitted from the first DU, wherein the measurement response message includes a global ID of a base station of the second DU, second identification information of the second DU in the base station, and second time information, and wherein the second time information is used to identify a difference between a second system time at which the measurement request message is received at the second DU and a third system time at which the measurement response message is transmitted from the second DU.

12. The electronic device of claim 11, wherein the second time information includes information on the second system time and information on the third system time.

13. The electronic device of claim 11, wherein the second time information includes first difference information for indicating a difference between the second system time and the third system time.

**14.** The electronic device of claim 11,

wherein, when executed, the one or more instructions further cause the first DU to obtain a link delay between the first DU and the second DU based on the first system time, the second system time, the third system time, and a fourth system time,
wherein the fourth system time indicates a time at which the measurement response message is received at the first DU.

**15.** The electronic device of claim 14,

wherein the link delay is determined by dividing a difference between a first difference value and a second difference value by two,
wherein the first difference value indicates a time interval from the first system time to the fourth system time, and
wherein the second difference value indicates a time interval from the second system time to the third system time.

FIG. 1A

FIG. 1B

FIG. 2A

FIG. 2B

FIG. 2C

RADIO FRAME (314)

SUBFRAME (306)

$N_{RB}^{DL}$ OR $N_{RB}^{UL}$ SUBCARRIERS (304)

$N_{RB}$ SUBCARRIERS (310)

RESOURCE ELEMENT (312)

RESOURCE BLOCK (308)

$N_{symb}$ OFDM SYMBOLS (302)

FIG. 3

45

FIG. 4A

FIG. 4B

<u>500</u>

| MEMORY (520) | PROCESSOR (530) | TRANSCEIVER (510) |

FIG. 5

FIG. 6

610

DU #1

620

DU #2

T1

F2 Measurement Request (701)
[Global gNB ID, gNB-DU ID, System time (T1),
Target Global gNB ID, Target gNB-DU ID]

T2

Delta

T3

T4

F2 Measurement Response (703)
[Global gNB ID, gNB-DU ID, (T1 (*), (T2, T3) (*), delta (*),
Target Global gNB ID, Target gNB-DU ID, Target System time]

FIG. 7

FIG. 8A

FIG. 8B

FIG. 8C

FIG. 9A

FIG. 9B

610

DU #1

620

DU #2

F2 Setup Request (-) 1001

F2 Setup Response (-) 1003
(OK, I will trigger 2-way time sync : T1 )

T1 — F2 Measurement Request 1011 — T2

T4 — F2 Measurement Response 1013 — T3

1015

DELAY CONDITION
ANALYSIS

T5 — F2 Measurement Complete 1017 — T6

1019

DELAY CONDITION
ANALYSIS

FIG. 10A

FIG. 10B

FIG. 10C

610

620

DU #1

DU #2

F2 Setup Request (3-way delay measure req)

F2 Setup Request (3-way delay measurement req)

1101

1103

1105

ACCEPT

F2 Setup Response

1107

"OK, I will trigger (3-way delay measure OK)"

FIG. 11

610

DU #1

620

DU #2

F2 Setup Request

1201

(optimized delay measure : T1, Threshold (*))

T1

T2

1203

DELAY
CONDITION ANALYSIS
: T2-T1 > threshold

YES

NO

END

F2 Setup Response

1205

(&Measurement Response : T1, T2, T3, threshold (*) )

T4

T3

1207

DELAY CONDITION
ANALYSIS

F2 Measurement complete

1209

(T3, T4, T5)

T5

T6

1211

DELAY CONDITION
ANALYSIS

FIG. 12

FIG. 13

FIG. 14

FIG. 15

1600

```
0                   1                   2                   3
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|  32-bit                        Seconds                        |
+-+-+-+-+-+-+-+-+-+-+-+-+-+-+-+-+-+-+-+-+-+-+-+-+-+-+-+-+-+-+-+-+
|  32-bit                        Fraction                       |
+-+-+-+-+-+-+-+-+-+-+-+-+-+-+-+-+-+-+-+-+-+-+-+-+-+-+-+-+-+-+-+-+
```

NTP Timestamp Format

FIG. 16

## INTERNATIONAL SEARCH REPORT

| International application No. |
|---|
| **PCT/KR2024/004031** |

**A. CLASSIFICATION OF SUBJECT MATTER**

**H04W 24/08**(2009.01)i; **H04W 88/08**(2009.01)i; **H04W 92/20**(2009.01)i

According to International Patent Classification (IPC) or to both national classification and IPC

**B. FIELDS SEARCHED**

Minimum documentation searched (classification system followed by classification symbols)

H04W 24/08(2009.01); H04L 41/50(2022.01); H04L 43/0852(2022.01); H04W 28/08(2009.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DU(분산유닛), 인터페이스(interface), 측정(measurement), 시간(time)

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0104255 A (ZTE CORPORATION) 26 July 2022 (2022-07-26)<br>See paragraphs [0029]-[0044]; and claims 1-39. | 1-15 |
| A | WO 2023-018897 A1 (INTEL CORPORATION) 16 February 2023 (2023-02-16)<br>See paragraphs [0114]-[0130]; and claims 1-20. | 1-15 |
| A | EP 4132133 A1 (HUAWEI TECHNOLOGIES CO., LTD.) 08 February 2023 (2023-02-08)<br>See paragraphs [0114]-[0156]; and claims 1-24. | 1-15 |
| A | US 11329926 B2 (ZTE CORPORATION) 10 May 2022 (2022-05-10)<br>See column 7, line 46 - column 9, line 10; and claims 1-16. | 1-15 |
| A | 3GPP; TSG SA; Management and orchestration; 5G performance measurements (Release 18). 3GPP TS 28.552 V18.2.0 (March 2023). 30 March 2023.<br>See sections 5.1.3.3.1-5.1.3.3.6. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004031**

| Patent document cited in search report | | | Publication date (day/month/year) | Patent family member(s) | | | Publication date (day/month/year) |
|---|---|---|---|---|---|---|---|
| KR | 10-2022-0104255 | A | 26 July 2022 | CN | 116097874 | A | 09 May 2023 |
| | | | | EP | 4066572 | A1 | 05 October 2022 |
| | | | | EP | 4066572 | A4 | 15 March 2023 |
| | | | | JP | 2023-509024 | A | 06 March 2023 |
| | | | | JP | 7443529 | B2 | 05 March 2024 |
| | | | | US | 2022-0322127 | A1 | 06 October 2022 |
| | | | | WO | 2022-027665 | A1 | 10 February 2022 |
| WO | 2023-018897 | A1 | 16 February 2023 | KR | 10-2024-0047993 | A | 12 April 2024 |
| EP | 4132133 | A1 | 08 February 2023 | AU | 2021-250929 | A1 | 21 October 2021 |
| | | | | AU | 2021-250929 | B2 | 13 April 2023 |
| | | | | AU | 2021-255553 | A1 | 21 October 2021 |
| | | | | CN | 111399294 | A | 10 July 2020 |
| | | | | CN | 111399294 | B | 27 July 2021 |
| | | | | CN | 111481932 | A | 04 August 2020 |
| | | | | CN | 111481932 | B | 17 May 2022 |
| | | | | CN | 111606891 | A | 01 September 2020 |
| | | | | CN | 111606891 | B | 17 January 2023 |
| | | | | CN | 111614806 | A | 01 September 2020 |
| | | | | CN | 111614806 | B | 09 April 2021 |
| | | | | CN | 112713976 | A | 27 April 2021 |
| | | | | CN | 113542457 | A | 22 October 2021 |
| | | | | CN | 113542457 | B | 11 October 2022 |
| | | | | CN | 113543299 | A | 22 October 2021 |
| | | | | CN | 115362669 | A | 18 November 2022 |
| | | | | EP | 3939681 | A1 | 19 January 2022 |
| | | | | EP | 4023017 | A1 | 06 July 2022 |
| | | | | EP | 4124002 | A1 | 25 January 2023 |
| | | | | EP | 4131900 | A1 | 08 February 2023 |
| | | | | EP | 4132133 | A4 | 28 February 2024 |
| | | | | JP | 2021-170103 | A | 28 October 2021 |
| | | | | JP | 2022-533321 | A | 22 July 2022 |
| | | | | JP | 2023-158115 | A | 26 October 2023 |
| | | | | JP | 2023-521481 | A | 24 May 2023 |
| | | | | JP | 2023-521482 | A | 24 May 2023 |
| | | | | JP | 7350088 | B2 | 25 September 2023 |
| | | | | JP | 7391241 | B2 | 04 December 2023 |
| | | | | JP | 7495521 | B2 | 04 June 2024 |
| | | | | KR | 10-2021-0050442 | A | 07 May 2021 |
| | | | | KR | 10-2021-0141670 | A | 23 November 2021 |
| | | | | KR | 10-2673807 | B1 | 07 June 2024 |
| | | | | US | 11502113 | B2 | 15 November 2022 |
| | | | | US | 2022-0047941 | A1 | 17 February 2022 |
| | | | | US | 2022-0123022 | A1 | 21 April 2022 |
| | | | | US | 2023-0036797 | A1 | 02 February 2023 |
| | | | | US | 2023-0075646 | A1 | 09 March 2023 |
| | | | | US | 2023-0171334 | A1 | 01 June 2023 |
| | | | | US | 2024-0080811 | A1 | 07 March 2024 |
| | | | | WO | 2021-080164 | A1 | 29 April 2021 |
| | | | | WO | 2021-208027 | A1 | 21 October 2021 |
| | | | | WO | 2021-208145 | A1 | 21 October 2021 |

Form PCT/ISA/210 (patent family annex) (July 2022)

**INTERNATIONAL SEARCH REPORT**
Information on patent family members

International application No.

**PCT/KR2024/004031**

| Patent document cited in search report | Publication date (day/month/year) | Patent family member(s) | | Publication date (day/month/year) |
|---|---|---|---|---|
| | | WO | 2021-208250 A1 | 21 October 2021 |
| | | WO | 2021-208251 A1 | 21 October 2021 |
| | | WO | 2021-208253 A1 | 21 October 2021 |
| | | WO | 2021-208258 A1 | 21 October 2021 |
| | | WO | 2021-208259 A1 | 21 October 2021 |
| | | WO | 2021-208260 A1 | 21 October 2021 |
| | | WO | 2021-208614 A1 | 21 October 2021 |
| | | WO | 2021-208661 A1 | 21 October 2021 |
| | | WO | 2021-208668 A1 | 21 October 2021 |
| | | WO | 2021-208669 A1 | 21 October 2021 |
| | | WO | 2021-208751 A1 | 21 October 2021 |
| | | WO | 2021-209001 A1 | 21 October 2021 |
| | | WO | 2021-209008 A1 | 21 October 2021 |
| US 11329926 B2 | 10 May 2022 | US | 2021-0021534 A1 | 21 January 2021 |

Form PCT/ISA/210 (patent family annex) (July 2022)